# EUROPEAN PATENT APPLICATION

(11) **EP 4 137 264 A1**
(43) Date of publication of application: **22.02.2023**
(21) Application number: 20931250.3
(22) Date of filing: 15.04.2020
(51) Int. Cl.: B23K 26/082, B23K 26/046

(54) **PROCESSING APPARATUS**

(71) Applicant: NIKON CORPORATION, Minato-ku Tokyo 108-6290 (JP)
(72) Inventor: NAGASAKA, Hiroyuki, Tokyo 108-6290 (JP)
(74) Representative: Hoffmann Eitle
(86) International application number: PCT/JP2020/016602
(87) International publication number: WO 2021/210103

(57) **Abstract**

A processing apparatus is a processing apparatus that processes an object by a processing light from a processing light source, includes a first optical system that condenses the processing light from the processing light source on a condensed plane; and a second optical system that condenses the processing light from the first optical system to irradiate the object with it, a position in the condensed plane through which the processing light passes is changeable, a propagating direction of the processing light propagating from the first optical system to the second optical system changes depending on the position in the condensed plane through which the processing light passes.

## Description

### Technical Field

The present invention relates to a processing apparatus that is configured to process an object by a processing light.

### Background Art

A Patent Literature 1 discloses, as a processing apparatus that is configured to process an object, a processing apparatus that is configured to form a structure by irradiating a surface of an object with a processing light.. This type of processing apparatus is required to properly process the object.

### Citation List

### Patent Literature

Patent Literature 1: US4,994,639B

### Summary of Invention

A first aspect provides a processing apparatus that is configured to process an object by a processing light from a processing light source, wherein the processing apparatus includes: a first optical system that is configured to condense the processing light from the processing light source on a condensed plane; and a second optical system that is configured to condense the processing light from the first optical system to irradiate the object with it, a position in the condensed plane through which the processing light passes is changeable, a propagating direction of the processing light propagating from the first optical system to the second optical system changes depending on the passing position.

A second aspect provides a processing apparatus that is configured to process an object by a processing light from a processing light source, wherein the processing apparatus includes an irradiation optical system that is configured to condense the processing light to irradiate the object with it, the irradiation optical system emitting the processing light toward a surface that intersects with a plane perpendicular to an optical axis of the irradiation optical system.

A third aspect provides a processing apparatus that is configured to process an object by a processing light from a processing light source, wherein the processing apparatus includes: an irradiation optical system that is configured to condense the processing light to irradiate the object with it; and a movable optical member that is movable to change an irradiation position of the processing light with which the object is irradiated, a condensed position of the processing light from the irradiation optical system is changed in an annular area surrounding an optical axis of the irradiation optical system.

A fourth aspect provides a processing apparatus that is configured to process an object by a processing light from a processing light source, wherein the processing apparatus includes an irradiation optical system that is configured to condense the processing light to irradiate the object with it, the irradiation optical system includes an optical member that is located at the most object side along an optical path of the processing light among optical members included in the irradiation optical system and that has a meniscus shape in which a convex plane faces toward an exit side of the processing light.

A fifth aspect provides a processing apparatus that is configured to process an object by a processing light from a processing light source, wherein the processing apparatus includes an irradiation optical system that is configured to condense the processing light to irradiate the object with it, the irradiation optical system includes an optical member that is located at the most object side along an optical path of the processing light among optical members included in the irradiation optical system, a position on the object that is irradiated with the processing light emitted from the optical member is located at a position that is away from an object-side optical surface of the optical member located at the most object side toward an entrance side of the optical member along an optical axis direction of the irradiation optical system.

A sixth aspect provides a processing apparatus that is configured to process an object, which has a first surface and a second surface facing the first surface, by a processing light from a processing light source, wherein the processing apparatus includes: an objective optical system that is disposed to be located between the first surface and the second surface and that is configured to irradiate at least one of the first surface and the second surface with the processing light; and a movable optical member that is disposed on an processing optical path that is at the processing light source side from a position between the first surface and the second surface, an irradiation position of the processing light on at least one of the first surface and the second surface is changed by moving the movable optical member.

A seventh aspect provides a processing apparatus that is configured to process an object, which has a first surface and a second surface facing the first surface, by a processing light, wherein the processing apparatus includes: an objective optical system that is disposed to be located between the first surface and the second surface and that is configured to irradiate at least one of the first surface and the second surface with the processing light; a measurement part that is configured to optically receive, through the objective optical system, a light from at least one of the first surface and the second surface as a measurement light to measure at least one of the first surface and the second surface; and a movement part that is configured to move the objective optical system along a first direction that intersects with a direction connecting the first surface and the second surface, at least a part of at least one of the first surface and the second surface is measured when the movement part moves the objective optical system toward a first side along the first direction, at least a part of at least one of the first surface and the second surface is processed when the movement part moves the objective optical system toward a second side opposite to the first side along the first direction.

A eighth aspect provides a processing apparatus that is configured to process an object, which has a first surface and a second surface facing the first surface, by a processing light, wherein the processing apparatus includes: an objective optical system that is disposed to be located between the first surface and the second surface and that is configured to irradiate at least one of the first surface and the second surface with the processing light; and a suction part that is configured to suck a gas around the objective optical system from a lateral space of the objective optical system.

A ninth aspect provides a processing apparatus that is configured to process an object, which has a first surface and a second surface facing the first surface, by a processing light, wherein the processing apparatus includes: an objective optical system that is disposed to be located between the first surface and the second surface and that is configured to irradiate at least one of the first surface and the second surface with the processing light; and a supply part that is configured to supply a gas from a tip of the objective optical system.

A tenth aspect provides a processing apparatus that is configured to process an object by a processing light, wherein the processing apparatus includes: an objective optical system that is disposed to be located between a first surface and a second surface of the object and that is configured to irradiate at least one of the first surface and the second surface with the processing light; and a measurement part that is configured to optically receive, through the objective optical system, a light from at least one of the first surface and the second surface as a measurement light to measure at least one of the first surface and the second surface, the measurement part includes a imaging element that is configured to capture an image of at least one of the first surface and the second surface two-dimensionally.

### Brief Description of Drawings

[FIG. 1] FIG. 1 is a perspective view that conceptionally illustrates an exterior appearance of a processing system in a first example embodiment.
[FIG. 2] FIG. 2 is a system configuration diagram that illustrates a system configuration of the processing system in the first example embodiment.
[FIG. 3] FIG. 3 is a cross-sectional view that illustrates a configuration of a processing head.
[FIG. 4] FIG. 4 is a cross-sectional view that illustrates an optical path of a processing light in the processing head.
[FIG. 5] FIG. 5 is a cross-sectional view that illustrates the processing head at least a part of which is inserted into a space formed in a workpiece.
[FIG. 6] FIG. 6A is a perspective view that illustrates an aspect in which an irradiation position of the processing light illustrated in FIG. 5 is changed by a Galvano mirror, and FIG. 6B is a cross-sectional view that illustrates an aspect in which the irradiation position of the processing light illustrated in FIG. 5 is changed by the Galvano mirror.
[FIG. 7] FIG. 7 is a cross-sectional view that illustrates an optical path of a measurement light in the processing head.
[FIG. 8] FIG. 8 is a perspective view that illustrates an area on a surface of the workpiece that is irradiated with the measurement light from an objective optical system.
[FIG. 9] FIG. 9 is a cross-sectional view that illustrates the processing head that has moved to a position at which it can be inserted into the space formed in the workpiece.
[FIG. 10] FIG. 10 is a top view that illustrates a marker formed on the workpiece.
[FIG. 11] FIG. 11 is a cross-sectional view that illustrates the processing head in a period during which a measurement operation is performed.
[FIG. 12] FIG. 12 is a cross-sectional view that illustrates the processing head in a period during which a processing operation is performed.
[FIG. 13] FIG. 13A is a cross-sectional view that illustrates an inner wall surface at which a concavity and convexity exists, and FIG. 13B is a cross-sectional view that illustrates the inner wall surface after the processing operation is performed to smooth the concavity and convexity.
[FIG. 14] FIG. 14 is a perspective view that illustrates another example of the workpiece.
[FIG. 15] FIG. 15 is a cross-sectional view that illustrates a positional relationship between the workpiece and the objective optical system that is inserted into the space formed in the workpiece illustrated in FIG. 14.
[FIG. 16] FIG. 16 is a perspective view that illustrates another example of the workpiece.
[FIG. 17] FIG. 17 is a perspective view that illustrates another example of the workpiece.
[FIG. 18] FIG. 18 is a system configuration diagram that illustrates a system configuration of a processing system in a second example embodiment.
[FIG. 19] FIG. 19 is a cross-sectional view that illustrates an exhaust and gas supply member, a gas supply apparatus and an exhaust apparatus that are configured to suck a gas around the objective optical system from a lateral space of the objective optical system.
[FIG. 20] FIG. 20 is a cross-sectional view that illustrates another example of the exhaust and gas supply member.
[FIG. 21] FIG. 21 is a system configuration diagram that illustrates a system configuration of a processing system in a third example embodiment.
[FIG. 22] FIG. 22 is a cross-sectional view that illustrates an objective optical system and an exhaust and gas supply member in the third example embodiment.
[FIG. 23] FIG. 23 is a perspective view that conceptionally illustrates an exterior appearance of a processing system in a fourth example embodiment.
[FIG. 24] FIG. 24 is a cross-sectional view that illustrates a configuration of a processing head in a fifth example embodiment.
[FIG. 25] FIG. 25 is a perspective view that conceptionally illustrates an exterior appearance of a processing system in the sixth example embodiment.
[FIG. 26] FIG. 26 is a system configuration diagram that illustrates a system configuration of the processing system in the sixth example embodiment.
[FIG. 27] FIG. 27 is a cross-sectional view that illustrates a configuration of a processing head and a measurement head in the sixth example embodiment.
[FIG. 28] FIG. 28 is a system configuration diagram that illustrates a system configuration of a processing system in a seventh example embodiment.
[FIG. 29] FIG. 29 is a perspective view that illustrates another example of the workpiece.

### Description of Embodiments

Next, with reference to drawings, an example embodiment of a processing apparatus will be described. In the below described description, the example embodiment of the processing apparatus will be described by using a processing system SYS that is configured to process a workpiece W by using a processing light EL. However, the present invention is not limited to the below described embodiment.

Moreover, in the below described description, a positional relationship of various components that constitute the processing system SYS will be described by using an XYZ rectangular coordinate system that is defined by a X axis, a Y axis and a Z axis that are perpendicular to one another. Note that each of an X axis direction and a Y axis direction is assumed to be a horizontal direction (namely, a predetermined direction in a horizontal plane) and a Z axis direction is assumed to be a vertical direction (namely, a direction that is perpendicular to the horizontal plane, and substantially an up-down direction), for the purpose of simple description, in the below described description. Moreover, rotational directions (in other words, inclination directions) around the X axis, the Y axis and the Z axis are referred to as a θX direction, a θY direction and a θZ direction, respectively. Here, the Z axis direction may be a gravity direction. An XY plane may be a horizontal direction.

### (1) Processing System SYSa in First Example Embodiment

Firstly, the processing system SYS in a first example embodiment (in the below described description, the processing system SYS in the first example embodiment is referred to as a "processing system SYSa") will be described.

### (1-1) Configuration of Processing System SYSa

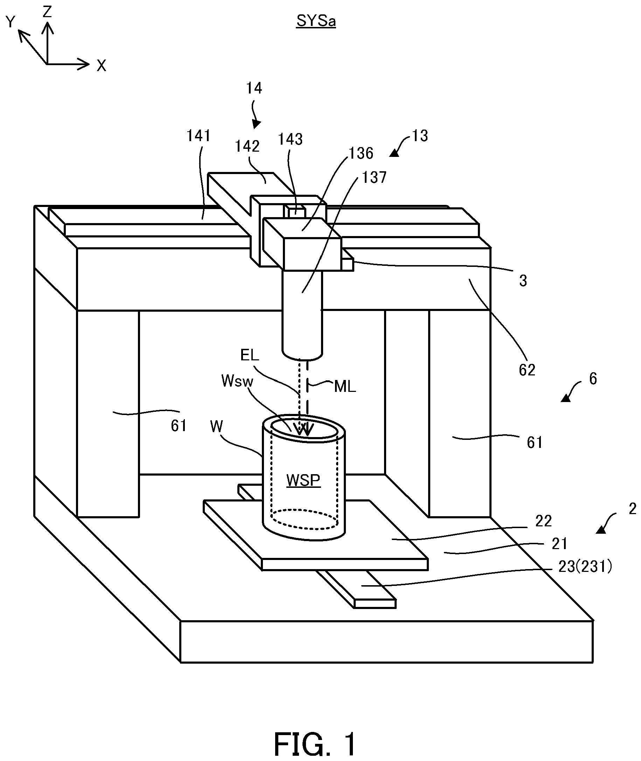

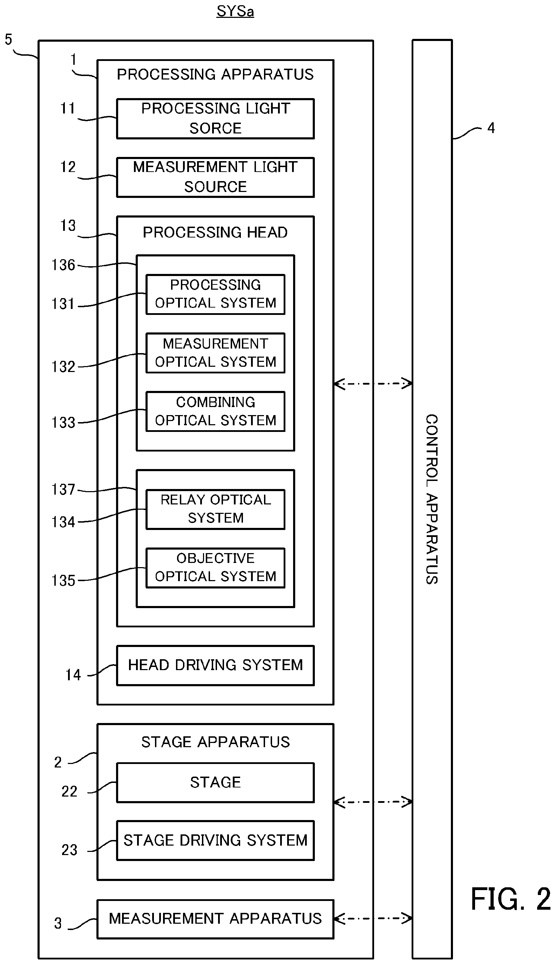

Firstly, with reference to FIG. 1 and FIG. 2, a configuration of the processing system SYSa in the first example embodiment will be described. FIG. 1 is a perspective view that conceptionally illustrates an exterior appearance of the processing system SYSa in the first example embodiment. FIG. 2 is a system configuration diagram that illustrates a system configuration of the processing system SYSa in the first example embodiment.

As illustrated in FIG. 1 and FIG. 2, the processing system SYSa includes a processing apparatus 1, a stage apparatus 2, a measurement apparatus 3 and a control apparatus 4. The processing apparatus 1, the stage apparatus 2 and the measurement apparatus 3 are contained in a housing 5. However, the processing apparatus 1, the stage apparatus 2 and the measurement apparatus 3 may not be contained in the housing 5. Namely, the processing system SYSa may not include the housing 5 in which the processing apparatus 1, the stage apparatus 2 and the measurement apparatus 3 are contained.

The processing apparatus 1 is configured to processes the workpiece W under the control of the control apparatus 4. The workpiece W may be a metal, may be an alloy (for example, a duralumin and the like), may be a semiconductor (for example, a silicon), may be a resin, may be a composite material such as a CFRP (Carbon Fiber Reinforced Plastic), may be a glass, may be a ceramic or may be an object that is made from any other material, for example.

The processing apparatus 1 irradiates the workpiece W with a processing light EL in order to process the workpiece W. The processing light EL may be any type of light, as long as the workpiece W is processed by irradiating the workpiece W with it. In the present embodiment, an example in which the processing light EL is a laser light will be described, however, the processing light EL may be a light a type of which is different from the laser light. Furthermore, a wavelength of the processing light EL may be any wavelength, as long as the workpiece W is processed by irradiating the workpiece W with it. For example, the processing light EL may be a visible light, may be an invisible light (for example, at least one of an infrared light, an ultraviolet light and the like). The processing light EL includes a pulsed light, however, may not include the pulsed light. In other words, the processing light EL may be a continuous light.

The processing apparatus 1 may perform a removal processing (typically, a cutting processing or a grinding processing) for removing a part of the workpiece W by irradiating the workpiece W with the processing light EL. The removal processing may include at least one of a surface cutting processing, a surface grinding processing, a cylindrical cutting processing, a cylindrical grinding processing, a drilling cutting processing, a drilling grinding processing, a surface polishing processing, a cutting-off processing and a carving processing for forming (in other words, carving) any character or any pattern.

When the removal processing is performed, the processing apparatus 1 may form a riblet structure on the workpiece W. The riblet structure is a structure by which a resistance (especially, at least one of a frictional resistance and a turbulent frictional resistance) of the surface of the workpiece W to a fluid is reducible. The riblet structure may include a structure in which a plurality of grooves each of which extends along a first direction (for example, the Y axis direction) that is along the surface of the workpiece W are arranged along a second direction (for example, the X axis direction) that is along the surface of the workpiece W and that intersects with the first direction, for example.

The processing apparatus 1 may perform an additive processing for adding new structural object to the workpiece W by irradiating the workpiece W with the processing light EL, in addition to or instead of the removal processing. In this case, the processing apparatus 1 may form the above described riblet structure on the workpiece W by performing the additive processing. The processing apparatus 1 may perform a marking processing for forming a desired mark on a surface of the workpiece W by irradiating the workpiece W with the processing light EL, in addition to or instead of at least one of the removal processing and the additive processing.

The processing apparatus 1 may measure a state of the workpiece W. The state of the workpiece W may include a position of the workpiece W. The position of the workpiece W may include a position of the surface of the workpiece W. The position of the surface of the workpiece W may include a position of each surface part, which is obtained by segmentalizing the surface of the workpiece W, in at least one of the X axis direction, the Y axis direction and the Z axis direction. The state of the workpiece W may include a shape (for example, a three-dimensional shape) of the workpiece W. The shape of the workpiece W may include the shape of the surface of the workpiece W. The shape of the surface of the workpiece W may include a direction of each surface part, which is obtained by segmentalizing the surface of the workpiece W (for example, a direction of a normal line of each surface part, and it is substantially equivalent to an inclined amount of each surface part with respect to at least one of the X axis, the Y axis and the Z axis), in addition to or instead of the above described position of the surface of the workpiece W. The state of the workpiece W may include a size (for example, a size in at least one of the X axis direction, the Y axis direction and the Z axis direction) of the workpiece W.

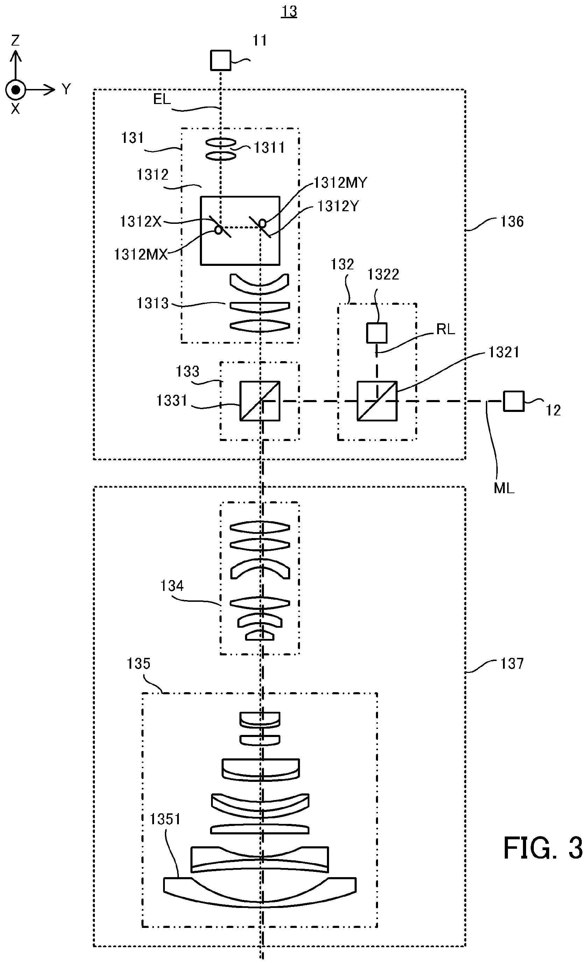

In order to process and measure the workpiece W, the processing apparatus 1 includes a processing light source 11 that is configured to generate the processing light EL, a measurement light source 12 that is configured to generate a measurement light ML, a processing head 13 that is configured to irradiate the workpiece W with the processing light EL from the processing light source 11 and to irradiate the workpiece W with the measurement light ML from the measurement light source 12 and a head driving system 14 that is configured to move the processing head 13. Furthermore, the processing head 13 includes a processing optical system 131, a measurement optical system 132, a combining optical system 133, a relay optical system 134 and an objective optical system 135. An optical system including the relay optical system 134 and the objective optical system 135 may be referred to as an irradiation optical system. Note that a configuration of the processing head 13 will be described later in detail by using FIG. 3.

The processing optical system 131, the measurement optical system 132 and the combining optical system 133 of the processing head 13 are contained in a head housing 136. The relay optical system 134 and the objective optical system 135 of the processing head 13 are contained in a head housing 137. However, the processing optical system 131, the measurement optical system 132 and the combining optical system 133 may not be contained in the head housing 136. The relay optical system 134 and the objective optical system 135 may not be contained in the head housing 137

The head housing 137 is connected to the head housing 136. The head housing 137 is coupled with a lower part (namely, the -Z side) of the head housing 136. The head housing 137 is disposed at a position that is closer to a below described stage 22 (furthermore, the workpiece W placed on the stage 22) than the head housing 136 is. The head housing 137 has a shape that allows the head housing 137 to be inserted into a space WSP formed in the workpiece W (specifically, a space WSP surrounded by at least a part of the surface of the workpiece W). In an example illustrated in FIG. 1, the cylindrical space WSP that is surrounded by an inner wall surface Wsw extending along the Z axis direction and that extends along the Z axis direction is formed in the workpiece W. In this case, the head housing 137 may have a shape (for example, a cylindrical shape extending along the Z axis direction) that allows the head housing 137 to be inserted into the cylindrical space WSP. The processing head 13 may process and measure the workpiece W in a state where the head housing 137 is inserted into the space WSP of the workpiece W. On the other hand, the head housing 136 connected to an upper part (namely, the +Z side) of the head housing 137 may not be inserted into the space WSP of the workpiece W.

The head driving system 14 is configured to move (namely, displace) the processing head 13 under the control of the control apparatus 4. The head driving system 14 may move the processing head 13 relative to at least one of a surface plate 21 and the stage 22 of the stage apparatus 2 described below (furthermore, relative to the workpiece W placed on the stage 22).

The head driving system 14 moves the processing head 13 along at least one of the X axis direction, the Y axis direction, the Z axis direction, the θX direction, the θY direction and the θZ direction. Note that moving the processing head 13 along at least one of the θX direction, the θY direction and the θZ direction may be regarded to be equivalent to changing an attitude of the processing head 13 around at least one of the X axis, the Y axis and the Z axis. FIG. 1 illustrates an example in which the head driving system 14 moves the processing head 13 along each of the X axis direction and the Z axis direction. In this case, the head driving system 14 includes a X slide member 141 that extends along the X axis direction, a X stage member 142 that is connected to the X slide member 141 to be movable along the X slide member 141, and a Z slide member 143 that is connected to the X stage member 142 and that extends along the Z axis direction, for example. The X slide member 141 is disposed at a support frame 6 that is disposed on the surface plate 21 through a vibration isolator. The support frame 6 may include: a pair of leg members 61 that are disposed on the surface plate 21 through the vibration isolator and that extends along the Z axis direction; and a beam member 62 that extends along the X axis direction and that is disposed on the pair of the leg members 61 so as to connect upper end parts of the pair of the leg members 61. The X slide member 141 is disposed at the beam member 62, for example. The processing head 13 (in an example illustrated in FIG. 1, the head housing 136 of the processing head 13) is connected to the Z slide member 143 to be movable along the Z slide member 143. When the X stage member 142 moves along the X slide member 141, the processing head 13 that is connected to the X stage member 142 through the Z slide member 143 moves along the X axis direction. Moreover, the processing head 13 moves along the Z slide member 143. Thus, the processing head 13 is movable along each of the X axis direction and the Z axis direction.

When the processing head 13 moves, a positional relationship between the stage 22 (moreover, the workpiece W placed on the stage 22) and the processing head 13 changes. Namely, the processing head 13 moves, a relative position between the processing head 13 and each of the stage 22 and the workpiece W changes. Therefore, moving the processing head 13 is equivalent to changing the positional relationship between the processing head 13 and each of the stage 22 and the workpiece W. Furthermore, when the positional relationship between the processing head 13 and each of the stage 22 and the workpiece W changes, a positional relationship between each optical system (namely, at least one of the processing optical system 131, the measurement optical system 132, the combining optical system 133, the relay optical system 134 and the objective optical system 135) of the processing head 13 and each of the stage 22 and the workpiece W changes. Therefore, moving the processing head 13 is equivalent to changing the positional relationship between each optical system of the processing head 13 and each of the stage 22 and the workpiece W. Moving the processing head 13 is equivalent to moving each optical system of the processing head 13. Furthermore, when the positional relationship between the processing head 13 and each of the stage 22 and the workpiece W changes, an irradiation position of each of the processing light EL and the measurement light ML on the workpiece W changes. Therefore, moving the processing head 13 is equivalent to changing the irradiation position of each of the processing light EL and the measurement light ML on the workpiece W.

The stage apparatus 2 includes the surface plate 21, the stage 22 and a stage driving system 23.

The surface plate 21 is disposed on a button surface of the housing 5 (alternatively, a support surface such as a floor surface on which the housing 5 is placed). The stage 22 is disposed on the surface plate 21. A non-illustrated vibration isolator that reduces a transmission of vibration from the surface plate 21 to the stage 22 may be disposed between the surface plate 21 and the bottom surface of the housing 5 or the support surface such as the floor surface on which the housing 5 is placed. Furthermore, the above described support frame 6 may be disposed on the surface plate 21.

The workpiece W is placed on the stage 22. In this case, the stage 22 may not hold the placed workpiece W. Namely, the stage 22 may not add a holding power for holding the workpiece W to the placed workpiece W. Alternatively, the stage 22 may hold the placed workpiece W. Namely, the stage 22 may add the holding power for holding the workpiece W to the placed workpiece W. For example, the stage 22 may hold the workpiece W by vacuum-sucking and / or electrostatically sucking the workpiece W.

The stage driving system 23 is configured to move the stage 22 along at least one of the X axis direction, the Y axis direction, the Z axis direction, the θX direction, the θY direction and the θZ direction. Note that moving the stage 22 along at least one of the θX direction, the θY direction and the θZ direction may be regarded to be equivalent to changing an attitude of stage 22 (furthermore, the workpiece W placed on the stage 22) around at least one of the X axis, the Y axis and the Z axis. FIG. 1 illustrates an example in which the stage driving system 23 moves stage 22 along the Y axis direction. In this case, the stage driving system 23 includes a Y slide member 231 that is disposed on the surface plate 21 through a vibration isolator and that extends along the Y axis direction, for example. The stage 22 is connected to the Y slide member 231 to be movable along the Y slide member 231. As a result, the stage 22 is movable along the Y axis direction.

When the stage 22 moves, the positional relationship between the stage 22 (moreover, the workpiece W placed on the stage 22) and the processing head 13 changes. Namely, the stage 22 moves, the relative position between the processing head 13 and each of the stage 22 and the workpiece W changes. Therefore, moving the stage 22 is equivalent to changing the positional relationship between the processing head 13 and each of the stage 22 and the workpiece W. Furthermore, when the positional relationship between the processing head 13 and each of the stage 22 and the workpiece W changes, a positional relationship between each optical system of the processing head 13 and each of the stage 22 and the workpiece W changes. Therefore, moving the stage 22 is equivalent to changing the positional relationship between each optical system of the processing head 13 and each of the stage 22 and the workpiece W. Furthermore, when the positional relationship between the processing head 13 and each of the stage 22 and the workpiece W changes, the irradiation position of each of the processing light EL and the measurement light ML on the workpiece W changes. Therefore, moving the stage 22 is equivalent to changing the irradiation position of each of the processing light EL and the measurement light ML on the workpiece W.

The measurement apparatus 3 is configured to measure a measurement target object. The measurable target object may include the workpiece W, for example. In this case, the processing system SYS is configured to measure the workpiece W by using the measurement light ML from the processing apparatus 1 and is configured to measure the workpiece W by using the measurement apparatus 3. The measurement apparatus 3 may measure the stage of the workpiece W (alternatively, any measurement target object different from the workpiece W, the same is applied to the below described description) of the workpiece W. A measured result by the measurement apparatus 3 is used to mainly performing an alignment between the processing head 13 and the workpiece W as described later in detail. In this case, a measurement resolution of the measurement apparatus 3 may be lower than a measurement resolution by using the measurement light ML from the processing apparatus 1. However, the measurement resolution of the measurement apparatus 3 may be same as or higher than the measurement resolution by using the measurement light ML from the processing apparatus 1. An imaging apparatus such as a camera and so on is one example of the measurement apparatus 3. The imaging apparatus may capture an image of the workpiece W itself, and may capture an image of the workpiece W on which a predetermined projection pattern is projected from an illumination apparatus of the measurement apparatus 3.

The measurement apparatus 3 may be disposed at the processing head 13. In this case, even when the processing head 13 moves, a positional relationship between the processing head 13 and the measurement apparatus 3 does not change. Alternatively, the measurement apparatus 3 may be disposed at a position that is fixed relative to the processing head 13. A relative positional relationship between the measurement apparatus 3 and the processing head 13 may be an information that is already known to the control apparatus 4.

The control apparatus 4 is configured to control the operation of the processing system SYSa. For example, the control apparatus 4 may control an operation of the processing system SYS (for example, an operation of at least one of the processing apparatus 1, the stage apparatus 2 and the measurement apparatus 3) so that the processing apparatus 1 properly processes the workpiece W.

The control apparatus 4 may include an arithmetic apparatus and a storage apparatus. The arithmetic apparatus may include at least one of a CPU (Central Processing Unit) and a GPU (Graphic Processing Unit), for example. The control apparatus 4 serves as an apparatus for controlling the operation of the processing system SYSa by means of the arithmetic apparatus executing a computer program. The computer program is a computer program that allows the control apparatus 4 (for example, the arithmetic apparatus) to execute (namely, to perform) a below described operation that should be executed by the control apparatus 4. Namely, the computer program is a computer program that allows the control apparatus 4 to function so as to make the processing system SYSa execute the below described operation. The computer program executed by the arithmetic apparatus may be recorded in the storage apparatus (namely, a recording medium) of the control apparatus 4, or may be recorded in any recording medium (for example, a hard disk or a semiconductor memory) that is built in the control apparatus 4 or that is attachable to the control apparatus 4. Alternatively, the arithmetic apparatus may download the computer program that should be executed from an apparatus disposed at the outside of the control apparatus 4 through a network interface.

The control apparatus 4 may not be disposed in the processing system SYSa. For example, the control apparatus 4 may be disposed at the outside of the processing system SYSa as a server or the like. In this case, the control apparatus 4 may be connected to the processing system SYSa through a wired and / or wireless network (alternatively, a data bus and / or a communication line). In this case, the control apparatus 4 and the processing system SYSa may be configured to transmit and receive various information through the network. Moreover, the control apparatus 4 may be configured to transmit an information such as a command and a control parameter to the processing system SYSa through the network. The processing system SYSa may include a reception apparatus that is configured to receive the information such as the command and the control parameter from the control apparatus 4 through the network. Alternatively, a first control apparatus that is configured to perform a part of the arithmetic processing performed by the control apparatus 4 may be disposed in the processing system SYSa and a second control apparatus that is configured to perform another part of the arithmetic processing performed by the control apparatus 4 may be disposed at an outside of the processing system SYSa.

Note that at least one of an optical disc such as n optical disc, a magnetic disc, an optical-magnetic disc, a semiconductor memory such as a USB memory, and another medium that is configured to store the program may be used as the recording medium recording therein the computer program that should be executed by the arithmetic apparatus. The recording medium may include a device that is configured to record the computer program. Furthermore, various arithmetic processing or functions included in the computer program may be realized by a logical processing block that is realized in the control apparatus 4 by means of the control apparatus 4 (namely, a computer) executing the computer program, may be realized by a hardware such as a predetermined gate array (a FPGA, an ASIC) of the control apparatus 4, or may be realized in a form in which the logical process block and a partial hardware module that realizes an partial element of the hardware are combined.

### (1-2) Configuration of Processing Head 13

Next, with reference to FIG. 3, one example of a configuration of the processing head 13 will be described. FIG. 3 is a cross-sectional view that illustrates one example of the configuration of the processing head 13.

As illustrated in FIG. 3, the processing light EL generated by the processing light source 11 enters the processing head 13 through a light transmitting member such as an optical fiber and so on. The processing light source 11 is configured to generate the processing light EL. When the processing light EL is the laser light, the processing light source 11 may include a laser diode, for example. Furthermore, the processing light source 11 may be a light source that is configured to pulsed-oscillate. In this case, the processing light source 11 is configured to generate a pulsed light (for example, a pulsed light having an ON time shorter than picoseconds) as the processing light EL.

The processing optical system 131 is an optical system to which the processing light EL from the processing light source 11 enters. The processing optical system 131 is an optical system that emits, toward the combining optical system 133, the processing light EL entering the processing optical system 131. Therefore, the processing optical system 131 is disposed on an optical path of the processing light EL between the processing light source 11 and the combining optical system 133 (furthermore, the relay optical system 134 and the objective optical system 135). The workpiece W is irradiated with the processing light EL emitted from the processing optical system 131 through the combining optical system 133, the relay optical system 134 and the objective optical system 135.

The processing optical system 131 includes a focus adjustment optical system 1311, a Galvano mirror 1312 and a fθ lens 1313, for example.

The processing light EL from the processing light source 11 enters the focus adjustment optical system 1311. The focus adjustment optical system 1311 is an optical member that is configured to adjust a light concentration position of the processing light EL (namely, a condensed position of the processing light EL in a propagating direction of the processing light EL). Thus, the focus adjustment optical system 1311 may be referred to as a condensed position change member. The focus adjustment optical system 1311 may include a plurality of lenses that are arranged along the propagating direction of the processing light EL, for example. In this case, the light concentration position of the processing light EL may be changed by moving at least one of the plurality of lenses along its optical axis direction.

The processing light EL that has passed through the focus adjustment optical system 1311 enters the Galvano mirror 1312. The Galvano mirror 1312 changes a direction along which the processing light EL is emitted from the Galvano mirror 1312 (furthermore, a direction along which the processing light EL is emitted from the processing head 13) by deflecting the processing light EL (namely, changing an emitting angle of the processing light EL). When the direction along which the processing light EL is emitted from the Galvano mirror 1312 is changed, the direction along which the processing light EL is emitted from the processing head 13 is changed. When the direction along which the processing light EL is emitted from the processing head 13 is changed, an irradiation position of the processing light EL on the surface of the workpiece W is changed. Note that the Galvano mirror 1312 may be referred to as an emitting direction change member.

The Galvano mirror 1312 includes a X sweeping mirror 1312X that is a movable optical member disposed on the optical path of the processing light EL, a X actuator 1312MX that is configured to move (namely, displace) the X sweeping mirror 1312X, a Y sweeping mirror 1312Y that is a movable optical member disposed on the optical path of the processing light EL and a Y actuator 1312YX that is configured to move (namely, displace) the Y sweeping mirror 1312Y for example. Each of the X sweeping mirror 1312X and the Y sweeping mirror 1312Y is a tilt angle variable mirror an angle of which is variable relative to the optical path of the processing light EL entering each mirror. The X sweeping mirror 1312X deflects the processing light EL by changing the angle of the X sweeping mirror 1312X relative to the optical path of the processing light EL by the X actuator 1312MX. The Y sweeping mirror 1312Y deflects the processing light EL by changing the angle of the Y sweeping mirror 1312Y relative to the optical path of the processing light EL by the Y actuator 1312MY

Incidentally, the processing optical system 131 may include any optical member that is configured to deflect the processing light EL (namely, that is configured to change the direction along which the processing light EL is emitted from the processing head 13), in addition to or instead of the Galvano mirror 1312. A polygonal mirror having a plurality of reflection surfaces angles of which are different from each other is one example of the optical member. The polygonal mirror is rotatable so as to change an incident angle of the processing light EL with respect to one reflection surface in a period during which the one reflection surface is irradiated with the processing light EL and to switch the reflection surface that is irradiated with the processing light EL between the plurality of reflection surfaces.

The processing light EL from the Galvano mirror 1312 enters the fθ lens 1313. The fθ lens 1313 is an optical system that is configured to emit, toward the combining optical system 133, the processing light EL from the Galvano mirror 1312.

On the other hand, the measurement light ML generated by the measurement light source 12 enters the processing head 13 through a light transmitting member such as an optical fiber and so on. Specifically, the measurement light ML generated by the measurement light source 12 enters the measurement optical system 132. The measurement optical system 132 is an optical system that emits, toward the combining optical system 133, the measurement light ML entering the measurement optical system 132. Therefore, the measurement optical system 132 is disposed on an optical path of the measurement light ML between the measurement light source 12 and the combining optical system 133 (furthermore, the relay optical system 134 and the objective optical system 135). The workpiece W is irradiated with the measurement light ML emitted from the measurement optical system 132 through the combining optical system 133, the relay optical system 134 and the objective optical system 135.

The measurement optical system 132 includes a beam splitter 1321 (for example, a polarized beam splitter). The beam splitter 1321 emits, toward the combining optical system 133, the measurement light ML from the measurement light source 12. In an example illustrated in FIG. 3, the measurement light ML from the measurement light source 12 passes through a polarized split surface of the beam splitter 1321 to be emitted toward the combining optical system 133. On the other hand, as described later, when the workpiece W is irradiated with the measurement light ML through the combining optical system 133, the relay optical system 134 and the objective optical system 135, a measurement light RL corresponding to a returned light from the workpiece W that has been irradiated with the measurement light ML enters the measurement optical system 132 through the combining optical system 133, the relay optical system 134 and the objective optical system 135. The beam splitter 1321 emits the measurement light RL toward a detection element 1322 of the measurement optical system 132. In the example illustrated in FIG. 3, the measurement light RL is reflected by the polarized split surface of the beam splitter 1321 to enter the detection element 1322. As a result, the detection element 1322 detects (for example, optically receive) the measurement light RL from the workpiece W. A detected result of the measurement light RL from the workpiece W is outputted to the control apparatus 4.

Both of the processing light EL emitted from the processing optical system 131 and the measurement light ML emitted from the measurement optical system 132 enter the combining optical system 133. The combining optical system 133 combines he processing light EL emitted from the processing optical system 131 and the measurement light ML emitted from the measurement optical system 132. Note that an operation for "combining the processing light EL and the measurement light MI," corresponds to an operation for emitting, toward the same direction (specifically, emitting, toward the same relay optical system 134), the processing light EL and the measurement light ML entering the combining optical system 133 from different directions. In order to combine the processing light EL and the measurement light ML, the combining optical system 133 includes a beam splitter 1331 (for example, a polarized beam splitter). The beam splitter 1331 emits, toward the relay optical system 134, the processing light EL and the measurement light ML entering the beam splitter 1331 from different directions. In the example illustrated in FIG. 3, the processing light EL entering the beam splitter 1331 passes through a polarized split surface to enter the relay optical system 134. Moreover, the measurement light ML entering the beam splitter 1331 is reflected by the polarized split surface to enter the relay optical system 134.

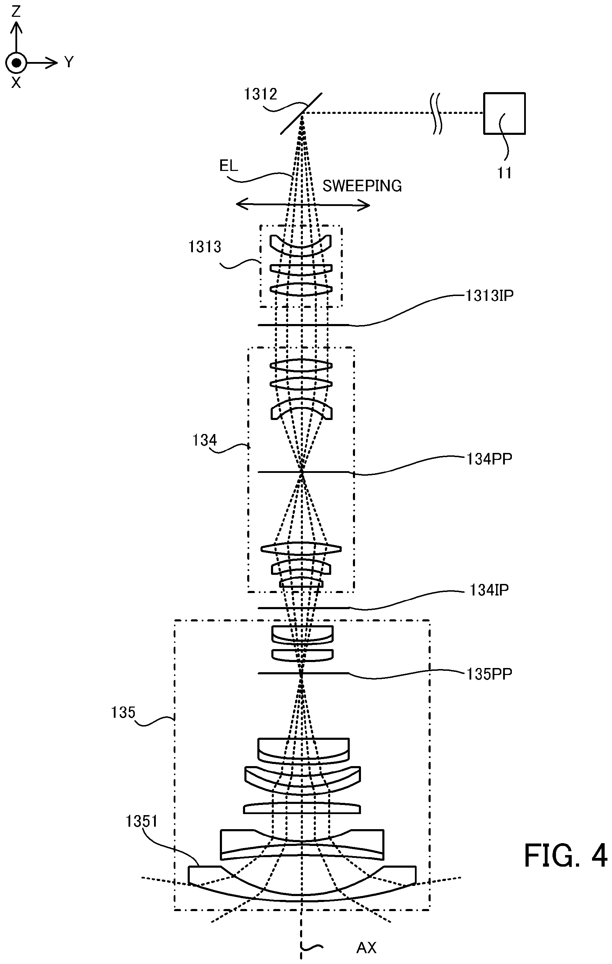

Each of the processing light EL and the measurement light ML that has entered the relay optical system 134 enters the objective optical system 135 through the relay optical system 134. Thus, the relay optical system 134 is disposed on the optical path of the processing light EL between the processing optical system 131 and the objective optical system 135 and is disposed on the optical path of the measurement light ML between the measurement optical system 132 and the objective optical system 135. The workpiece W is irradiated with each of the processing light EL and the measurement light ML that has entered the objective optical system 135 through the objective optical system 135. Especially, each of the processing light EL and the measurement light ML that has entered the objective optical system 135 is emitted toward the workpiece W from an terminal optical member 1351 that is located at the most workpiece W side (in the example illustrated in FIG. 3, the most -Z side) along the optical paths of the processing light EL and the measurement light ML among a plurality of optical members (especially, a plurality of optical members having a power) included in the objective optical system 135. An optical characteristic of the relay optical system 134 and the objective optical system 135 will be described with reference to the optical path of the processing light EL illustrated in FIG. 4.

FIG. 4 is a cross-sectional view that illustrates the optical path of the processing light EL in the processing head 13. Each of a plurality of dashed lines illustrating the optical path of the processing light EL in FIG. 4 represents a principal ray of the processing light EL in a situation where an angle of the Galvano mirror 1312 (specifically, an angle of each of the X sweeping mirror 1312X and the Y sweeping mirror 1312Y) with respect to the optical path of the processing light EL entering the Galvano mirror 1312 is fixed. Therefore, when the angle of at least one of the X sweeping mirror 1312X and the Y sweeping mirror 1312Y with respect to the optical path of the processing light EL is changed, an angle of the principal ray of the processing light EL emitted from the Galvano mirror 1312 with respect to each of an optical axis of the relay optical system 134 and an optical axis of the objective optical system 135 (hereinafter, these optical axes are referred to as an "optical axis AX") is changed. Thus, the plurality of dashed lines illustrated in FIG. 4 represents the optical path of the processing light EL that is changed depending on a movement of at least one of the X sweeping mirror 1312X and the Y sweeping mirror 1312Y

As illustrated in FIG. 4, the processing light EL from the Galvano mirror 1312 enters the fθ lens 1313. The fθ lens 1313 condenses the processing light EL entering the fθ lens 1313 on an intermediate condensed plane 1313IP that is a virtual optical plane intersecting with an optical axis of the fθ lens 1313. The intermediate condensed plane 1313IP is an optical plane located on the optical pat of the processing light EL between the fθ lens 1313 and the relay optical system 134. The intermediate condensed plane 1313IP corresponds to an imaging plane of the fθ lens 1313. Thus, a condensed spot that is same as (however, its magnification may be different) a condensed spot formed on the surface of the workpiece W by the processing light EL is formed on the intermediate condensed plane 1313IP. In other words, the fθ lens 1313 serves as an imaging optical member that forms an image of the processing light EL on the intermediate condensed plane 1313IP. Here, when at least one of the X sweeping mirror 1312X and the Y sweeping mirror 1312Y moves, a direction along which the processing light EL is emitted from the Galvano mirror 1312 is changed. When the direction along which the processing light EL is emitted from the Galvano mirror 1312 is changed, the condensed position of the processing light EL on the intermediate condensed plane 1313IP by the fθ lens 1313 is changed in a direction along the intermediate condensed plane 1313IP (namely, a direction intersecting with the optical axis of the fθ lens 1313). Namely, the condensed spot formed by the processing light EL on the intermediate condensed plane 1313IP moves. In other words, a position on the intermediate condensed plane 1313IP through which the processing light EL passes is changed. As a result, the irradiation position of the processing light EL on the surface of the workpiece W (namely, the position of the condensed spot formed by the processing light EL on the surface of the workpiece W) is changed.

The processing light EL from the fθ lens 1313 enters the relay optical system 134 through a non-illustrated combining optical system 133. The relay optical system 134 is an optical system that condenses the processing light EL entering the relay optical system 134 on a condensed plane 134IP that is a virtual optical plane intersecting with the optical axis AX of the relay optical system 134. The condensed plane 134IP corresponds to an imaging plane of the relay optical system 134. Here, the relay optical system 134 is aligned with respect to the fθ lens 1313 so that an object plane of the relay optical system 134 is coincident with the above described intermediate condensed plane 1313IP (namely, the image plane of the fθ lens 1313). Namely, the relay optical system 134 is aligned with respect to the fθ lens 1313 so that a relationship between the intermediate condensed plane 1313IP and the condensed plane 1341IP is an optically conjugate relationship. Thus, the relay optical system 134 serves as an optical system that allows the relationship between the intermediate condensed plane 1313IP and the condensed plane 1341IP to be the optically conjugate relationship.

The relay optical system 134 is aligned with respect to the objective optical system 135 so that the condensed plane 134IP is located in a space between the relay optical system 134 and the objective optical system 135. The relay optical system 134 is aligned with respect to the objective optical system 135 so that the condensed plane 134IP is located in a space between two optical members of optical members included in the relay optical system 134 and the objective optical system 135.

A condensed spot that is same as (however, its magnification may be different) the condensed spot formed on the surface of the workpiece W by the processing light EL is formed on the condensed plane 134IP. In other words, the relay optical system 134 serves as an imaging optical member that forms an image of the processing light EL on the condensed plane 134IP. Thus, when at least one of the X sweeping mirror 1312X and the Y sweeping mirror 1312Y moves, the direction along which the processing light EL is emitted from the Galvano mirror 1312 is changed. When the direction along which the processing light EL is emitted from the Galvano mirror 1312 is changed, a position at which the processing light EL is emitted from the relay optical system 134 is changed. When the position at which the processing light EL is emitted from the relay optical system 134 is changed, the condensed position of the processing light EL on the condensed plane 134IP by the relay optical system 134 is changed in a direction along the condensed plane 134IP (namely, a direction intersecting with the optical axis AX of the relay optical system 134). Namely, the condensed spot formed by the processing light EL on the condensed plane 134IP moves. In other words, a position on the condensed plane 134IP through which the processing light EL passes is changed. In this manner, the condensed position of the processing light EL on the condensed plane 134IP by the relay optical system 134 (namely, a position on the condensed plane 134IP through which the processing light EL passes) is changed depending on a change of the direction along which the processing light EL is emitted from the Galvano mirror 1312. As a result, the irradiation position of the processing light EL on the surface of the workpiece W (namely, the position of the condensed spot formed by the processing light EL on the surface of the workpiece W) is changed.

The relay optical system 134 may form, on the condensed plane 134IP, a reduced image of the image formed on the intermediate condensed plane 1313IP. Namely, the relay optical system 134 may be configured to serve as an imaging optical system having a reduced magnification. However, the relay optical system 134 may form, on the condensed plane 134IP, a same magnification image of the image formed on the intermediate condensed plane 1313IP. The relay optical system 134 may form, on the condensed plane 134IP, an enlarged image of the image formed on the intermediate condensed plane 1313IP.

The processing light EL from the relay optical system 134 enters the objective optical system 135. Here, a propagating direction of the processing light EL propagated from the relay optical system 134 to the objective optical system 135 changes depending on the position on the condensed plane 134IP through which the processing light EL passes. Note that the propagating direction of the processing light EL in the present example embodiment means a direction of the principal ray of the processing light EL. Specifically, the propagating direction of the processing light EL propagated from the relay optical system 134 to the objective optical system 135 changes so that an angle between the optical axis AX and a first axis along the propagating direction of the processing light EL that is condensed at a first position of the condensed plane 134IP is larger than an angle between the optical axis AX and a second axis along the propagating direction of the processing light EL that is condensed at a second position (note that the second position is closer to the optical axis AX than the first position is) of the condensed plane 134IP.

The relay optical system 134 and the objective optical system 135 are disposed so that an exit pupil 134P of the relay optical system 134 is located at a position that is away from the condensed plane 134IP toward the relay optical system 134 side (namely, a side opposite to the workpiece W side) and an entrance pupil 135PP of the objective optical system 135 is located at a position that is away from the condensed plane 134IP toward the workpiece W side. Note that each of the exit pupil 134P of the relay optical system 134 and the entrance pupil 135PP of the objective optical system 135 is typically optically conjugate with a position at which the Galvano mirror 1312 is disposed.

The objective optical system 135 condenses the processing light EL entering the objective optical system 135 to irradiate the workpiece W with it. Namely, the objective optical system 135 emits the processing light EL entering the objective optical system 135 toward the workpiece W so that the processing light EL entering the objective optical system 135 is condensed on the workpiece W. A direction along which the processing light EL is emitted from the objective optical system 135 is changed depending on the change of the direction along which the processing light EL is emitted from the above described Galvano mirror 1312.

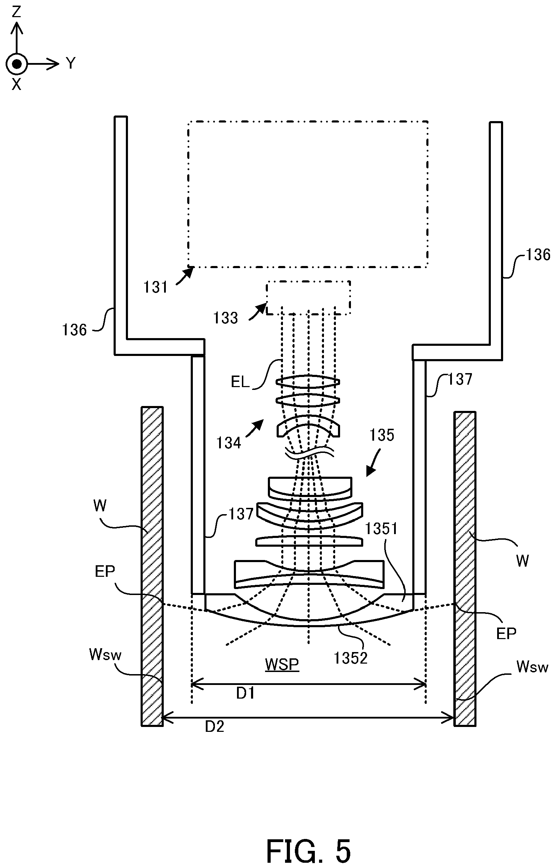

Especially in the first example embodiment, the objective optical system 135 emits the processing light EL toward the surface of the workpiece W that intersects with a plane perpendicular to the optical axis AX of the objective optical system 135. For example, as described above, the space WSP surrounded by at least a part of the surface of the workpiece W is formed in the workpiece W in the first example embodiment. In this case, at least a part of the surface of the workpiece W facing the space WSP intersects with the plane perpendicular to the optical axis AX. Thus, the objective optical system 135 may emit the processing light EL toward at least a part of the surface of the workpiece W facing the space WSP formed in the workpiece W. Specifically, as illustrated in FIG. 5 that is a cross-sectional view illustrating the processing head 13 at least a part of which is inserted into the space WSP formed in the workpiece W, when the space WSP is formed in the workpiece W, the processing head 13 processes the workpiece W in a state where at least a part of the processing head 13 is inserted into the space WSP. In an example illustrated in FIG. 5, the at least a part of the head housing 137 in which the relay optical system 134 and the objective optical system 135 are contained is inserted into the space WSP. In this case, at least a part of the head housing 137 is surrounded by at least a part of the surface of the workpiece W facing the space WSP (the inner wall surface Wsw in the example illustrated in FIG. 5). Thus, at least a part of the objective optical system 135 contained in the head housing 137 is surrounded by the inner wall surface Wsw of the workpiece W. As described above, at least a part of the inner wall surface Wsw of the workpiece W surrounding the objective optical system 135 is one example of the surface of the workpiece W that intersects with the plane perpendicular to the optical axis AX of the objective optical system 135. Thus, the objective optical system 135 may emit the processing light EL toward at least a part of the inner wall surface Wsw of the workpiece W. In this case, the processing light EL from the objective optical system 135 is condensed on the inner wall surface Wsw that is concave with respect to the objective optical system 135 (especially, the terminal optical member 1351).

Incidentally, it is preferable that a size D1 of the head housing 137 be smaller than a size D2 of the space WSP in a direction intersecting with a direction (the Z axis direction in the example illustrated in FIG. 5) along which the head housing 137 is inserted into the space WSP, in order to allow at least a part of the head housing 137 to be inserted into the space WSP. For example, the size D1 of the head housing 137 in the X axis direction may be smaller than the size D2 of the space WSP in the X axis direction. For example, the size D1 of the head housing 137 in the Y axis direction may be smaller than the size D2 of the space WSP in the Y axis direction. For example, the size D1 of the head housing 137 in one direction along the XY plane may be smaller than the size D2 of the space WSP in the one direction along the XY plane.

On the other hand, the head housing 136 may not be insertable into the space WSP formed in the workpiece W. In this case, the head housing 136 may be disposed at a position that is away from a position surrounded by the inner wall surface Wsw of the workpiece W facing the space WSP toward the processing light source 11 side. The processing optical system 131 (for example, at least one of the focus adjustment optical system 1311, the Galvano mirror 1312 and the fθ lens 1313) contained in the head housing 136 may be disposed at a position that is away from the position surrounded by the inner wall surface Wsw toward the processing light source 11 side. Namely, the processing optical system 131 may be disposed on the optical path of the processing light EL that is away from the position surrounded by the inner wall surface Wsw toward the processing light source 11 side.

When the objective optical system 135 emits the processing light EL toward the surface of the workpiece W that intersects with the plane perpendicular to the optical axis AX, the objective optical system 135 may have such a projection characteristic that it projects the image of the processing light EL on the surface of the workpiece W that intersects with the plane perpendicular to the optical axis AX. An optical system using a projection method different from a central projection method is one example of the optical system having this projection characteristic. At least one of an equidistant projection method, an equisolidangular projection method and an orthogonal projection method is one example of the projection method different from the central projection method.

The irradiation position of the processing light EL on the surface of the workpiece W that intersects with the plane perpendicular to the optical axis AX is changed by the Galvano mirror 1312 as described above, thus, a driving aspect of the Galvano mirror 1312 may be set in consideration of the projection characteristic of the objective optical system 135 that irradiates the surface of the workpiece W with the processing light EL. Namely, an emitting direction of the processing light EL that is changeable by the Galvano mirror 1312 may be set in consideration of the projection characteristic of the objective optical system 135. Since the Galvano mirror 1312 is driven by the X actuator 1312MX and the Y actuator 1312MY, the X actuator 1312MX and the Y actuator 1312MY may move the X sweeping mirror 1312M and the Y sweeping mirror 1312Y, respectively, in consideration of the projection characteristic of the objective optical system 135.

When the objective optical system 135 emits the processing light EL toward the surface of the workpiece W that intersects with the plane perpendicular to the optical axis AX, the objective optical system 135 may deflect the processing light EL entering the objective optical system 135 so that the processing light EL is farther away from the optical axis AX more as the processing light EL entering the objective optical system 135 propagates more, as illustrated in FIG. 5. More specifically, the terminal optical member 1351 of the objective optical system 135 may deflect the processing light EL entering the terminal optical member 1351 so that the processing light EL is farther away from an optical axis of the terminal optical member 1351 (note that the optical axis of the terminal optical member 1351 is typically coincident with the optical axis AX of the objective optical system 135) more as the processing light EL entering the terminal optical member 1351 propagates more.

When the objective optical system 135 emits the processing light EL toward the surface of the workpiece W that intersects with the plane perpendicular to the optical axis AX, the objective optical system 135 may emit the processing light EL toward a direction that makes an angle of 90 degree or more with respect to the optical axis AX, as illustrated in FIG. 5. More specifically, the terminal optical member 1351 of the objective optical system 135 may emit the processing light EL toward a direction that makes an angle of 90 degree or more with respect to the optical axis of the terminal optical member 1351 (namely, the optical axis AX), as illustrated in FIG. 5. In this case, the irradiation position (see a reference number EP in FIG. 5) on the workpiece W of the processing light EL emitted from the terminal optical member 1351 toward the direction that makes the angle of 90 degree or more with respect to the optical axis AX may be located at a position that is away from an optical surface 1352 of the terminal optical member 1351 at the workpiece W side toward an entrance side of the terminal optical member 1351 in the direction along the optical axis AX. Namely, the irradiation position on the workpiece W of the processing light EL emitted from the terminal optical member 1351 toward the direction that makes the angle of 90 degree or more with respect to the optical axis AX may be located at a position that is away from an optical surface 1352 of the terminal optical member 1351 at the workpiece W side toward the entrance side of the terminal optical member 1351 in the direction along the optical axis AX.

In order to allow the objective optical system 135 to emit the processing light EL toward the surface of the workpiece W that intersects with the plane perpendicular to the optical axis AX, an optical member that has a meniscus shape in which a convex plane faces toward an exit side of the processing light EL (the -Z side in the example illustrated in FIG. 4) may be used as the terminal optical member 1351. Specifically, a meniscus lens having a convex plane facing toward the exit side of the processing light EL may be used as the terminal optical member 1351. Namely, a lens in which a lens surface at the exit side of the processing light EL is a convex surface and a lens surface at the entrance side of the processing light EL (the +Z side in the example illustrated in FIG. 4) is a concave surface may be used as the terminal optical member 1351.

When the objective optical system 135 emits the processing light EL toward the surface of the workpiece W that intersects with the plane perpendicular to the optical axis AX, the objective optical system 135 may be aligned with respect to the workpiece W so that the surface of the workpiece W that is irradiated with the processing light EL is disposed to be symmetric with respect to the optical axis AX. For example, in the example illustrated in FIG. 5, the objective optical system 135 may be aligned with respect to the workpiece W so that the inner wall surface Wsw of the workpiece W that is irradiated with the processing light EL is disposed to be symmetric (for example, circular-symmetric) with respect to the optical axis AX. In this case, when the objective optical system 135 condenses the processing light EL on a first surface part that is a part of the inner wall surface Wsw, the condensed plane on which the processing light EL is condensed is a plane that is optically conjugate with a second surface part that is another part of the inner wall surface Wsw. Namely, it can be said that the objective optical system 135 forms, at a position of the first surface part that is a part of the surface Wsw of the workpiece W, a conjugate surface that is optically conjugate with a second surface part that is a part of the surface Wsw of the workpiece W that is irradiated with the processing light EL.

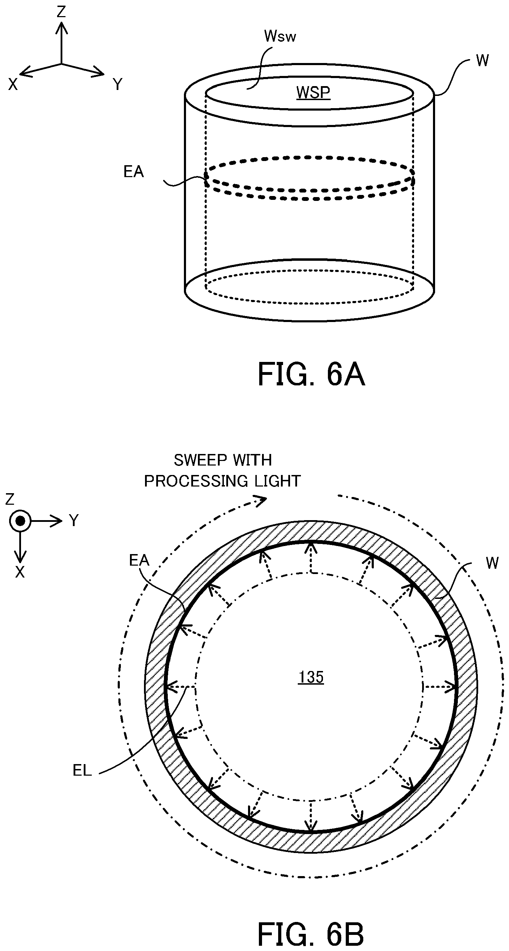

When this objective optical system 135 is used, the condensed position of the processing light EL emitted from the objective optical system 135 is changed by the Galvano mirror 1312 in a processing shot area EA that is an area on the surface of the workpiece W surrounding the optical axis AX of the objective optical system 135. Namely, the objective optical system 135 forms the condensed spot of the processing light EL in the processing shot area EA surrounding the optical axis AX. Note that the processing shot area EA corresponds to at least a part of an area that can be irradiated with the processing light EL when the Galvano mirror 1312 deflects the processing light EL while the relative positional relationship between the processing head 13 (especially, the terminal optical member 1351) and the workpiece W is fixed. Typically, the processing shot area EA corresponds to an area that is irradiated with the processing light EL that should be actually emitted toward the workpiece W to process the workpiece W when the Galvano mirror 1312 deflects the processing light EL while the relative positional relationship between the processing head 13 (especially, the terminal optical member 1351) and the workpiece W is fixed. For example, as illustrated in FIG. 6A and FIG. 6B each of which illustrates one example of the processing shot area EA, the condensed position of the processing light EL from the objective optical system 135 may be changed in the processing shot area EA that corresponds to a part of the cylindrical inner wall surface Wsw of the workpiece W. Namely, the irradiation position of the processing light EL on the surface of the workpiece W may be changed in the processing shot area EA that corresponds to a part of the cylindrical inner wall surface Wsw of the workpiece W. Thus, a shape of a cross-section (for example, a cross-section along the XY plane) of the processing shot area EA including an axis intersecting with the optical axis AX may be same as a shape of a cross-section of the inner wall surface Wsw (namely, a shape of a cross-section of the space WSP) including an axis intersecting with the optical axis AX. In the example illustrated in FIG. 6A and FIG. 6B, the shape of the cross-section of the processing shot area EA including the axis intersecting with the optical axis AX is a circular shape in conformity with the shape of the inner wall surface Wsw having the cylindrical shape. Namely, in the example illustrated in FIG. 6A and FIG. 6B, since the inner wall surface Wsw has the cylindrical shape, the processing shot area EA is an annular shape. The processing shot area EA is an area facing toward the optical axis AX side (namely, the objective optical system 135 side), because the surface of the workpiece W faces toward the optical axis AX side (namely, the objective optical system 135 side). In this case, it can be said that the objective optical system 135 emits the processing light EL toward the processing shot area EA so as to sweep the processing shot area EA surrounding the objective optical system 135 with the processing light EL. It can be said that the objective optical system 135 emits the processing light EL radially from the objective optical system 135 toward the processing shot area EA that faces toward the objective optical system 135 to surround the objective optical system 135. It can be said that the direction along which the processing light EL is emitted from the objective optical system 135 is changed by the Galvano mirror 1312 so that the processing shot area EA surrounding the objective optical system 135 is swept with the processing light EL.

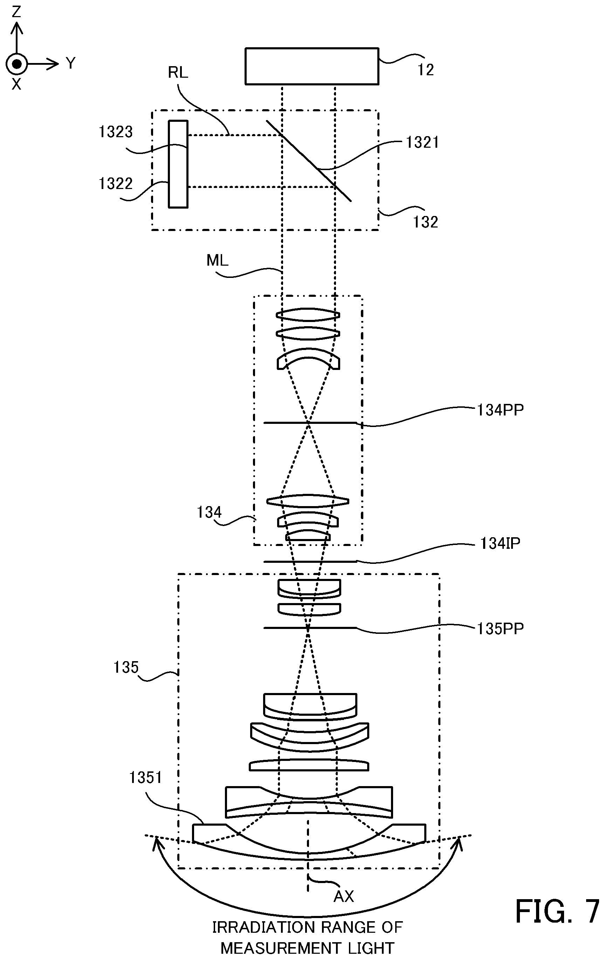

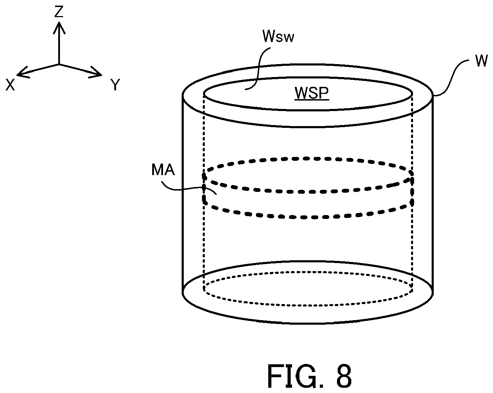

Next, in addition to the optical path of the processing light EL in the processing head 13 described above, the optical path of the measurement light ML in the processing head 13 will be described with reference to FIG. 7. As illustrated in FIG. 7, the measurement light ML from the measurement light source 12 enters the relay optical system 134 through the measurement optical system 132. Note that the dashed line representing the optical path of the measurement light ML in FIG. 4 conceptionally represents a border of a beam flux that corresponds to an aggregation of light beams forming the measurement light ML. As illustrated in FIG. 7, the measurement light ML enters the relay optical system 134 as a collimated light. In this case, the measurement light source 12 may be a surface light source that generates the collimated light. Alternatively, the measurement optical system 132 may include an optical system that converts the measurement light ML generated by the measurement light source 12 into the collimated light. The workpiece W is irradiated with the measurement light ML that has entered the relay optical system 134 through the relay optical system 134 and the objective optical system 135. Here, since the relay optical system 134 and the objective optical system 135 have the above described optical characteristic, the surface of the workpiece W that intersects with the plane perpendicular to the optical axis AX is irradiated with at least a part of the measurement light ML that has entered the relay optical system 134. Namely, as illustrated in FIG. 8 that illustrates an area on the surface of the workpiece W that is irradiated with the measurement light ML from the objective optical system 135, a measurement shot area MA that is an area on the surface of the workpiece W surrounding the optical axis AX of the objective optical system 135 is irradiated with at least a part of the measurement light ML that has entered the relay optical system 134. Here, since the measurement light ML enters the relay optical system 134 as the collimated light, whole of the measurement shot area MA is irradiated with at least a part of the measurement light ML that has entered the relay optical system 134 as the collimated light, even when the Galvano mirror 1312 does not deflect the measurement light ML. Therefore, the measurement shot area MA corresponds to at least a part of an area that can be irradiated with the measurement light ML while the relative positional relationship between the processing head 13 (especially, the terminal optical member 1351) and the workpiece W is fixed. As a result, the measurement light RL that is optically received by the detection element 1322 of the measurement optical system 132 enters the detection element 1322 as a collimated light including a returned light from whole of the measurement shot area MA. Thus, the detection element 1322 may include a plurality of light reception elements arranged two-dimensionally in order to detect the measurement light RL. Namely, the detection element 1322 may include an imaging element that is configured to two-dimensionally capture an image of the surface of the workpiece W that overlaps with the measurement shot area MA. In this case, the measurement light ML is substantially used as an illumination light for illuminating at least a part of the surface of the workpiece W.

### (1-3) Operation of Processing System SYSa

Next, an operation of the processing system SYSa will be described. The processing system SYSa performs an alignment operation for performing an alignment between the processing head 13 and the workpiece W by using the measured result by the measurement apparatus 3. Furthermore, the processing system SYSa performs a measurement operation for measuring at least part of the surface of the workpiece W by using the measurement light ML after performing the alignment operation. Furthermore, the processing system SYSa performs a processing operation for processing at least part of the surface of the workpiece W by using the processing light EL after performing the measurement operation. Thus, in the below described description, the alignment operation, the measurement operation and the processing operation will be described in order. Incidentally, in the below described description, the alignment operation, the measurement operation and the processing operation that are performed when the inner wall surface Wsw of the workpiece W in which the cylindrical space WSP illustrated in FIG. 1 is formed is processed will be described in order.

### (1-3-1) Alignment Operation

Firstly, the alignment operation will be described. In order to perform the alignment operation, the measurement apparatus 3 measures the workpiece W. For example, the measurement apparatus 3 may capture the image of the workpiece W by capturing the image of the workpiece W. As a result, the control apparatus 4 obtains an information related to the state of the workpiece W (especially, the position of the surface of the workpiece W). The information related to the position of the surface of the workpiece W obtained here includes an information related to a position of the surface of the workpiece W relative to the measurement apparatus 3. Here, since the relative positional relationship between the measurement apparatus 3 and the processing head 13 is fixed, the information related to a position of the surface of the workpiece W relative to the measurement apparatus 3 substantially includes an information related to a position of the surface of the workpiece W relative to the processing head 13. Thus, the control apparatus 4 is capable of obtaining the information related to the position of the surface of the workpiece W relative to the processing head 13 based on the measured result by the measurement apparatus 3 and an information that is related to the relative positional relationship between the measurement apparatus 3 and the processing head 13 and that is an information already known to the control apparatus 4.

On the other hand, it is difficult for the control apparatus 4 to determine based on only the measured result by the measurement apparatus 3 which part of the workpiece W is measured by the measurement apparatus 3. Namely, it is difficult for the control apparatus 4 to determine based on only the measured result by the measurement apparatus 3 what is the shape and the attitude of the workpiece W placed on the stage 22. Thus, the control apparatus 4 determines by using three-dimensional model data and the measured result by the measurement apparatus 3 what is the shape and the attitude of the workpiece W placed on the stage 22. Namely, the control apparatus 4 obtains an information related to the relative positional relationship between the processing head 13 and the workpiece W by fitting the three-dimensional model data to the measured result by the measurement apparatus 3.

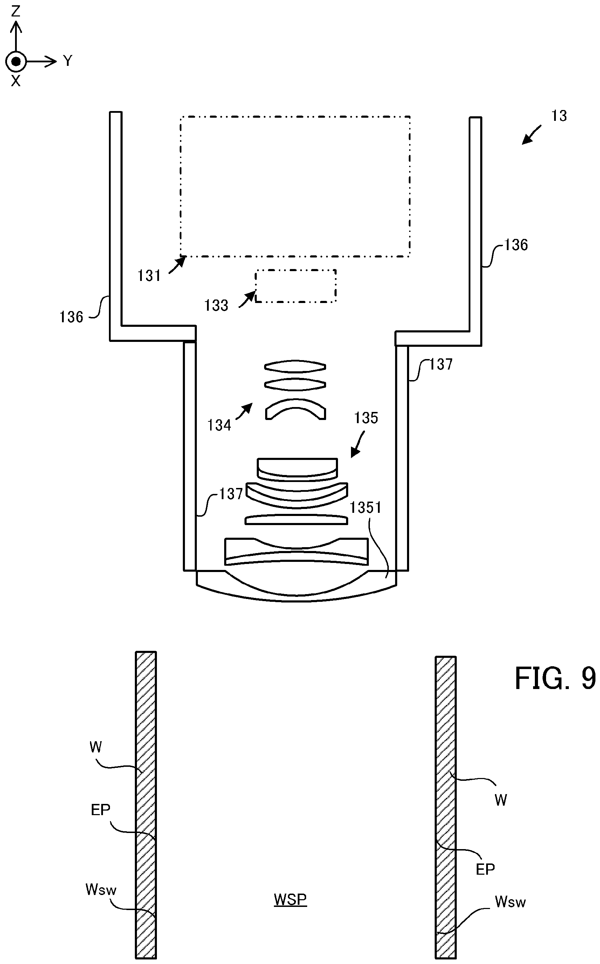

Then, the control apparatus 4 changes the relative positional relationship between the processing head 13 and the workpiece W to a positional relationship that is suitable for starting the below described measurement operation based on the information related to the relative positional relationship between the processing head 13 and the workpiece W. For example, as illustrated in FIG. 9, the control apparatus 4 may change the relative positional relationship between the processing head 13 and the workpiece W so that the head housing 137 moves to a position at which it is allowed to be inserted into the space WSP formed in the workpiece W. Specifically, for example, the control apparatus 4 may change the relative positional relationship between the processing head 13 and the workpiece W so that the head housing 137 is located above the space WSP formed in the workpiece W. Note that the relative positional relationship between the processing head 13 and the workpiece W is changeable by at least one of the head driving system 14 and the stage driving system 23 described above.

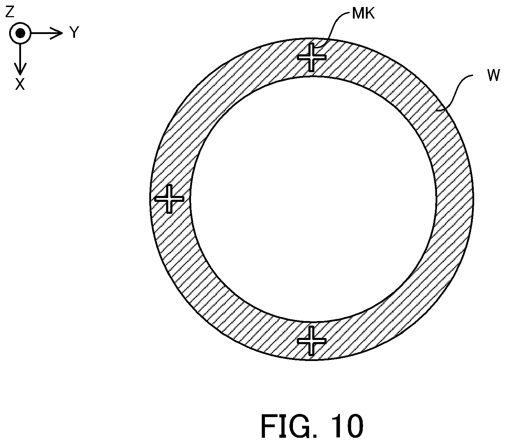

Alternatively, when a marker MK is formed at a position on the workpiece W that is already known to the control apparatus 4 as illustrated in FIG. 10 that is a top view illustrating one example of the workpiece W, the measurement apparatus 3 may measure the marker MK under the control of the control apparatus 4. As a result, the control apparatus 4 obtains an information related to a position of the marker MK (namely, an information related to a position of the marker MK relative to the processing head 13). Here, since the position of the marker MK is the information already known to the control apparatus 4, the control apparatus 4 may determine based on the information related to the position of the marker MK what is the shape and the attitude of the workpiece W placed on the stage 22. Namely, the control apparatus 4 may obtain the information related to the relative positional relationship between the processing head 13 and the workpiece W. Then, the control apparatus 4 changes the relative positional relationship between the processing head 13 and the workpiece W to the positional relationship that is suitable for starting the below described measurement operation based on the information related to the relative positional relationship between the processing head 13 and the workpiece W.

### (1-3-2) Measurement Operation

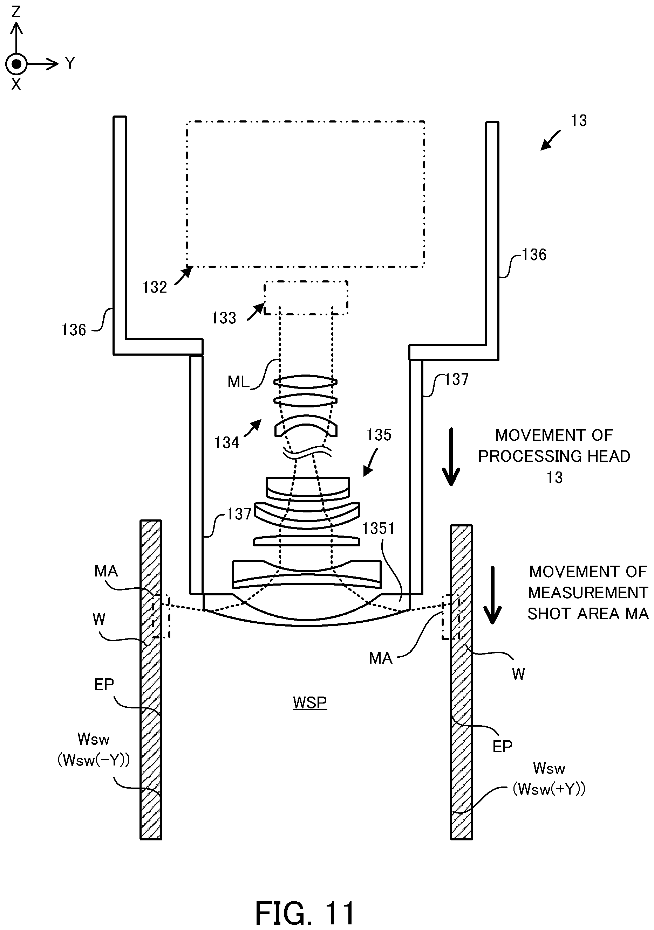

Next, the measurement operation will be described. as illustrated in FIG. 11 that illustrates the processing head 13 in a period during which the measurement operation is performed, the processing head 13 moves toward the -Z side along the Z axis direction so that the head housing 137 is inserted into the space WSP formed in the workpiece W after the measurement operation is started. Namely, the processing head 13 moves toward the -Z side along the Z axis direction that intersects with a direction connecting two surface parts of the inner wall surface Wsw of the workpiece W facing each other (namely, a direction along the XY plane). For example, the processing head 13 may move toward the -Z side along the Z axis direction that intersects with the Y axis direction connecting a surface part Wsw(-Y) of the inner wall surface Wsw of the workpiece W located at the -Y side and a surface part Wsw(+Y) of the inner wall surface Wsw of the workpiece W located at the +Y side. Although it is not illustrated in the drawings, the processing head 13 moves toward the -Z side along the Z axis direction that intersects with the X axis direction connecting a surface part of the inner wall surface Wsw of the workpiece W located at the -X side and a surface part of the inner wall surface Wsw of the workpiece W located at the +X side. As a result, the head housing 137 is gradually inserted into the space WSP formed in the workpiece W.

In at least a part of a period during which the head housing 137 is gradually inserted into the space WSP formed in the workpiece W, the objective optical system 135 emits the measurement light ML toward the measurement shot area MA on the surface (the inner wall surface Wsw here) of the workpiece W. Namely, the objective optical system 135 emits the measurement light ML toward the measurement shot area MA on the inner wall surface Wsw in at least a part of a period during which the processing head 13 moves toward the -Z side along the Z axis direction. The measurement shot area MA moves along with the movement of the processing head 13. Specifically, when the processing head 13 moves toward the -Z side along the Z axis direction, the measurement shot area MA also moves toward the -Z side along the Z axis direction on the inner wall surface Wsw of the workpiece W. In this case, the objective optical system 135 emits the measurement light ML toward the measurement shot area MA at a timing at which the measurement shot area MA overlaps with a part of the inner wall surface Wsw of the workpiece W that is desired to be measured by the measurement operation. On the other hand, the objective optical system 135 may not emit the measurement light ML toward the measurement shot area MA at a timing at which the measurement shot area MA overlaps with a part of the inner wall surface Wsw of the workpiece W that may not be measured by the measurement operation. Alternatively, the objective optical system 135 may keep emitting the measurement light ML regardless of the position of the measurement shot area MA. The processing head 13 moves toward the -Z side along the Z axis direction until the measurement of the part of the inner wall surface Wsw of the workpiece W that is desired to be measured by the measurement operation is completed. Namely, the head housing 137 keeps being inserted into the space WSP of the workpiece W until the measurement of the part of the inner wall surface Wsw of the workpiece W that is desired to be measured by the measurement operation is completed. The part of the inner wall surface Wsw of the workpiece W that is desired to be measured by the measurement operation typically corresponds to until a part of the inner wall surface Wsw of the workpiece W that is desired to be processed by the processing light EL. As a result, the measurement of the workpiece W is completed.

Note that the objective optical system 135 may emit the measurement light ML toward the measurement shot area MA on the inner wall surface Wsw in at least a part of a period during which the head housing 137 is gradually removed from the space WSP formed in the workpiece W. Namely, the objective optical system 135 may emit the measurement light ML toward the measurement shot area MA on the inner wall surface Wsw in at least a part of a period during which the processing head moves toward the +Z side opposite to the -Z side along the Z axis direction.

### (1-3-3) Processing Operation

Next, the processing operation will be described. Due to the above described measurement operation, an information related to the state of the inner wall surface Wsw of the workpiece W that should be processed by the processing light EL is obtained. The control apparatus 4 set a processing condition based on the information related to the state of the inner wall surface Wsw. The processing condition may include a condition related to the processing light EL. The condition related to the processing light EL may include at least one of an intensity of the processing light EL, an irradiation time of the processing light EL and an irradiation timing of the processing light EL. The processing condition may include a condition related to the movement of the processing head 13. The condition related to the movement of the processing head 13 may include at least one of a moving speed of the processing head 13, a moving timing of the processing head 13 and a moving distance of the processing head 13. The processing condition may include a condition related to the movement of the stage 22. The condition related to the movement of the stage 22 may include at least one of a moving speed of the stage 22, a moving timing of the stage 22 and a moving distance of the stage 22. The processing condition may include a condition related to the Galvano mirror 1312. The condition related to the Galvano mirror 1312 may include at least one of a rotational amount of the X sweeping mirror 1312X, a rotational speed of the X sweeping mirror 1312X, a rotational timing of the X sweeping mirror 1312X, a rotational direction of the X sweeping mirror 1312X, a rotational amount of the Y sweeping mirror 1312Y, a rotational speed of the Y sweeping mirror 1312Y, a rotational timing of the Y sweeping mirror 1312Y and a rotational direction of the Y sweeping mirror 1312Y

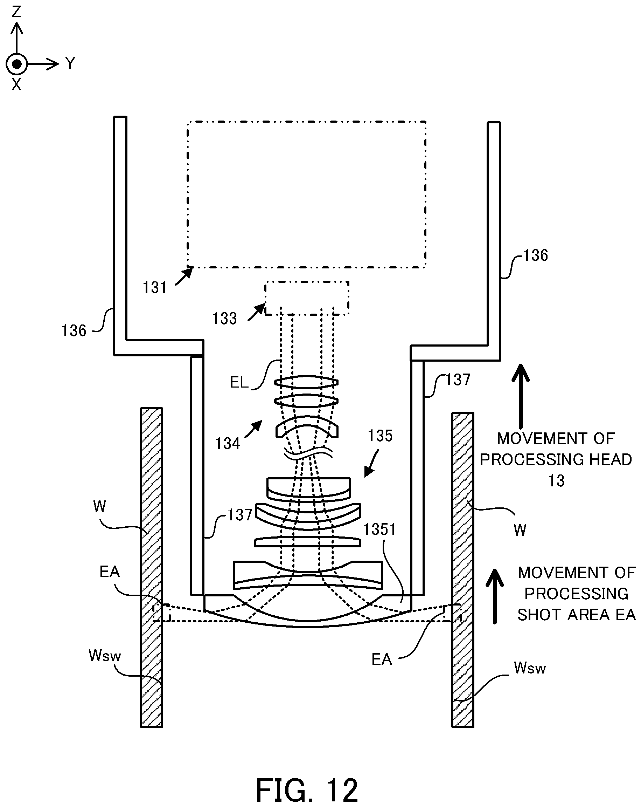

Then, the control apparatus 4 controls the processing apparatus 1 and the stage apparatus 2 to process the workpiece W (especially, to process the inner wall surface Wsw of the workpiece W) based on the set processing condition. Specifically, as described above, the head housing 137 is keeps being inserted into the space WSP of the workpiece W until the measurement of the part of the inner wall surface Wsw of the workpiece W that is desired to be measured by the measurement operation (namely, the part of the inner wall surface Wsw of the workpiece W that is desired to be processed by the processing light EL) is completed in the measurement operation. Thus, there is no need to insert the head housing 137 into the space WSP of the workpiece W more after the measurement operation is completed. Thus, as illustrated in FIG. 12 illustrating the processing head 13 in a period during which the processing operation is performed, in the processing operation, the processing head 13 moves toward the +Z side along the Z axis direction so that the head housing 137 is removed (namely, detached) from the space WSP formed in the workpiece W, differently from the measurement operation. Namely, the processing head 13 moves toward the +Z side, which is opposite to the -Z side toward which the processing head 13 moves in the measurement operation, along the Z axis direction that intersects with a direction connecting two surface parts of the inner wall surface Wsw of the workpiece W facing each other (namely, a direction along the XY plane). As a result, the head housing 137 is gradually removed from the space WSP formed in the workpiece W.

In at least a part of a period during which the head housing 137 is gradually removed from the space WSP formed in the workpiece W, the objective optical system 135 emits the processing light EL toward the processing shot area EA on the surface (the inner wall surface Wsw here) of the workpiece W. Namely, the objective optical system 135 emits the measurement light ML toward the processing shot area EA on the inner wall surface Wsw in at least a part of a period during which the processing head 13 moves toward the +Z side along the Z axis direction. The processing shot area EA moves along with the movement of the processing head 13. Specifically, when the processing head 13 moves toward the +Z side along the Z axis direction, the processing shot area EA also moves toward the +Z side along the Z axis direction on the inner wall surface Wsw of the workpiece W. In this case, the objective optical system 135 emits the measurement light ML toward the processing shot area EA at a timing at which the processing shot area EA overlaps with a part of the inner wall surface Wsw of the workpiece W that is desired to be processed by the processing operation. On the other hand, the objective optical system 135 may not emit the measurement light ML toward the measurement shot area MA at a timing at which the processing shot area EA overlaps with a part of the inner wall surface Wsw of the workpiece W that may not be processed by the processing operation. The processing head 13 moves toward the +Z side along the Z axis direction until the processing of the part of the inner wall surface Wsw of the workpiece W that is desired to be processed by the processing operation is completed. Namely, the head housing 137 keeps being removed from the space WSP of the workpiece W until the processing of the part of the inner wall surface Wsw of the workpiece W that is desired to be processed by the processing operation is completed. As a result, the processing of the workpiece W is completed.

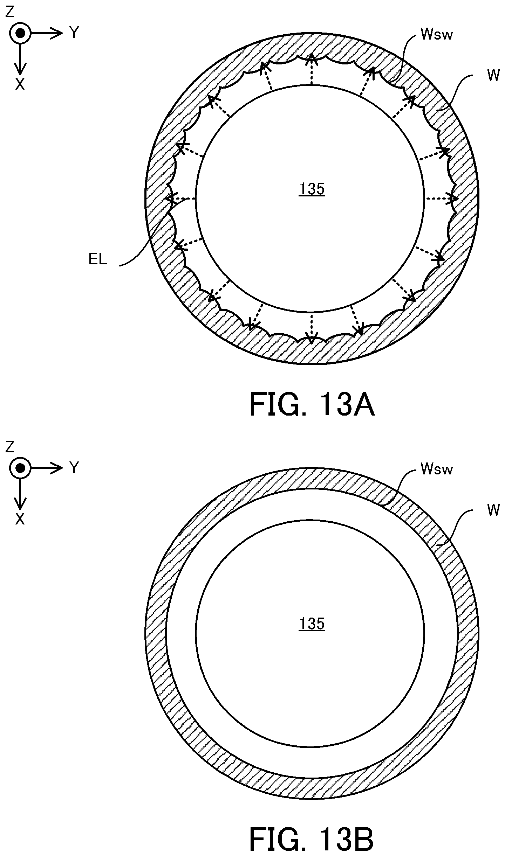

Polishing the inner wall surface Wsw is one example of the processing of the inner wall surface Wsw by the processing operation. For example, FIG. 13A illustrates the inner wall surface Wsw at which a concavity and convexity exists. In this case, the processing system SYSa may perform the processing operation to smooth the inner wall surface Wsw at which a concavity and convexity exists. For example, the processing system SYSa may perform the processing operation to irradiate a convex part of the inner wall surface Wsw with the processing light EL and not to irradiate a concave part of the inner wall surface Wsw with the processing light EL. As a result, as illustrated in FIG. 13B illustrating the processed inner wall surface Wsw, the inner wall surface Wsw is smoothed compared to that before the processing operation is performed.

Forming a riblet structure on the inner wall surface Wsw is another example of the processing of the inner wall surface Wsw by the processing operation. For example, the processing system SYSa may perform the processing operation to form, on the inner wall surface Wsw, the riblet structure in which a plurality of grooves each of which extends along the Z axis direction along which the cylindrical inner wall surface Wsw extends are arranged along a circumferential direction of the inner wall surface Wsw.

Note that the objective optical system 135 may emit the processing light EL toward the processing shot area EA on the inner wall surface Wsw in at least a part of the period during which the head housing 137 is gradually inserted into the space WSP formed in the workpiece W. Namely, the objective optical system 135 may emit the measurement light ML toward the processing shot area EA on the inner wall surface Wsw in at least a part of the period during which the processing head moves toward the -Z side opposite to the +Z side along the Z axis direction. However, a through-put of the processing system SYSa improves when the measurement operation is performed in at least a part of the period during which the head housing 137 is gradually inserted into the space WSP and the processing operation is performed in at least a part of the period during which the head housing 137 is gradually removed from the space WSP. This is because a moving distance of the head housing 137 is shorter.

### (1-4) Technical Effect of Processing System SYSa

The above described processing system SYSa is capable of properly processing the workpiece W by using the processing light EL. Furthermore, the processing system SYSa is capable of properly measuring the workpiece W by using the measurement light ML.

Especially, the processing system SYSa is capable of measuring and processing the workpiece W having a complicated shape. Specifically, the processing system SYSa is capable of measuring and processing the workpiece W in which the space WSP that is depressed to be surrounded by at least a part of the surface of the workpiece W is formed. For example, the processing system SYSa is capable of measuring and processing the workpiece W having a surface that is concave with respect to the processing head 13 (for example, the above described inner wall surface Wsw facing the space WSP).

Moreover, the processing system SYSa may not include the movable member such as the Galvano mirror 1312 and so on near the tip of the processing head 13. For example, the processing system SYSa may not include the movable member such as the Galvano mirror 1312 and so on in the head housing 137 that is inserted into the space WSP formed in the workpiece W. The processing system SYSa may include the movable member such as the Galvano mirror 1312 and so on in the head housing 136 that may not be inserted into the space WSP. Here, when the movable member such as the Galvano mirror 1312 and so on is disposed near the tip of the processing head 13 (for example, in the head housing 137), there is a possibility that a mechanical characteristic of the movable member is restricted. As a result, there is a possibility that an operation of the movable member is restricted. This is because the tip of the processing head 13 is inserted into the space WSP that is possibly narrow and thus the movable member has a design restriction. As a result, there is a possibility that a processing speed of the workpiece W (namely, a through-put for processing the workpiece W) deteriorates due to the restriction of the operation of the movable member. However, in the present example embodiment, the movable member such as the Galvano mirror 1312 and so on may not be disposed near the tip of the processing head 13, there is a relatively low possibility that the operation of the movable member is restricted. Therefore, there is also a relatively low possibility that the processing speed of the workpiece W (namely, the through-put for processing the workpiece W) deteriorates. As a result, the processing system SYSa is capable of processing the workpiece W relatively rapidly.

Moreover, the processing system SYSa measures the workpiece W by detecting the measurement light RL from the workpiece W by using the detection element 1322 including the imaging element that is configured to capture the image of the workpiece W tow-dimensionally. Thus, the processing system SYSa is capable of measuring the area on the surface of the workpiece W, which corresponds to a two-dimensional imaging surface of the imaging element, as a whole

### (1-5) Other Example of Workpiece W

The processing system SYSa may process the workpiece W that is different from the workpiece W in which the cylindrical space WSP extending along the Z axis direction is formed.

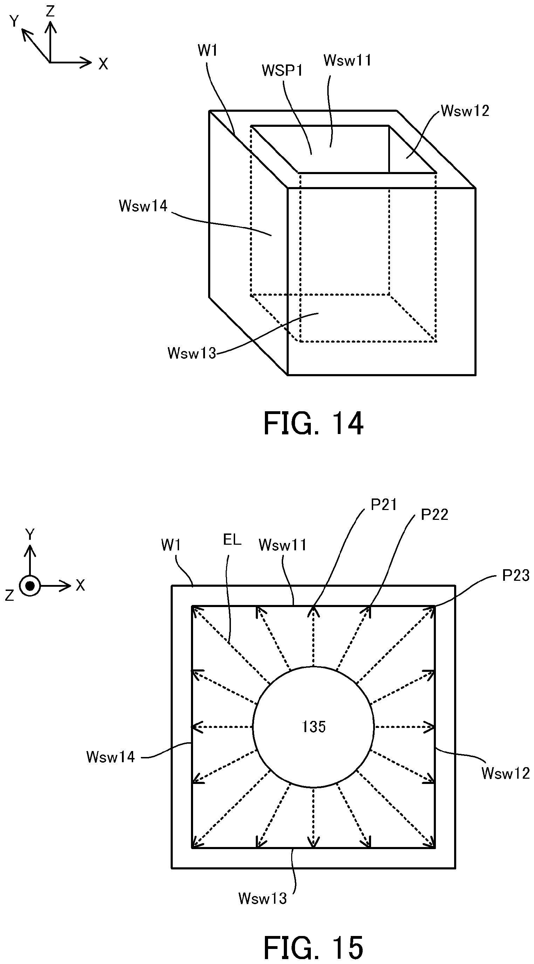

For example, as illustrated in FIG. 14 that is a perspective view illustrating another example of the workpiece W, the processing system SYSa may process a workpiece W1 in which a square tubular space WSP1 extending along the Z axis direction is formed. In an example illustrated in FIG. 14, the square tubular space WSP1 that is surrounded by the inner wall surface Wsw including an inner wall surface Wsw11 of the workpiece W facing toward the -Y side, an inner wall surface Wsw12 of the workpiece W facing toward the -X side, an inner wall surface Wsw13 of the workpiece W facing toward the +Y side and an inner wall surface Wsw14 of the workpiece W facing toward the +X side is formed in the workpiece W1. In this case, the processing system SYSa may process at least one of the inner wall surfaces Wsw11 to Wsw14 in a state where at least a part of the processing head 13 (especially, the head housing 137) is inserted into the space WSP1. Namely, the processing system SYSa may process the workpiece W1 by emitting the processing light EL toward at least one of the inner wall surfaces Wsw11 to Wsw14 from the objective optical system 135 that may be located between the inner wall surface Wsw11 and the inner wall surface Wsw13 and between the inner wall surface Wsw12 and the inner wall surface Wsw14. Moreover, the processing system SYSa may measure at least one of the inner wall surfaces Wsw11 to Wsw14 by detecting the measurement light RL from at least one of the inner wall surfaces Wsw11 to Wsw14 by the detection element 1322.

However, when a cross-section of the space WSP1 (namely, a cross-section of the inner wall surface Wsw) is not a circular shape, a distance between the terminal optical member 1351 of the objective optical system 135 and each part of the inner wall surface Wsw11 varies depending on a position of each part in the inner wall surface Wsw11. For example, as illustrated in FIG. 15 that is a cross-sectional view illustrating a positional relationship between the workpiece W1 and the objective optical system 135 that is inserted into the space WSP1 formed in the workpiece W1, a distance between the terminal optical member 1351 and a first part P21 of the inner wall surface Wsw11 that is located at or near a center of the inner wall surface Wsw11 in the X axis direction is shorter than a distance between the terminal optical member 1351 and a second part P22 of the inner wall surface Wsw11 that is farther away from the center of the inner wall surface Wsw11 in the X axis direction that the first part P21 is. A distance between the terminal optical member 1351 and the second part P22 of the inner wall surface Wsw11 is shorter than a distance between the terminal optical member 1351 and a third part P23 of the inner wall surface Wsw11 that is farther away from the center of the inner wall surface Wsw11 in the X axis direction that the second part P22 is. Namely, the distance between the terminal optical member 1351 and each part of the inner wall surface Wsw11 is longer as each part is farther away from center of the inner wall surface Wsw11 more. 0

When the distance between the terminal optical member 1351 and each part of the inner wall surface Wsw11 varies, a length of the optical path of the processing light EL between the terminal optical member 1351 and each part of the inner wall surface Wsw11 varies. As a result, a relative positional relationship between the light concentration position of the processing light EL and each part of the inner wall surface Wsw11. Thus, when the light concentration position of the processing light EL is fixed, there is a possibility that one part of the inner wall surface Wsw11 is irradiated with the processing light EL the light concentration position of which is coincident with the one part, however, another part of the inner wall surface Wsw11 is irradiated with the processing light EL the light concentration position of which is not coincident with the another part. Namely, there is a possibility that the one part of the inner wall surface Wsw11 is irradiated with the processing light EL that is properly condensed at the one part, however, the another part of the inner wall surface Wsw11 is irradiated with the defocused processing light EL. Thus, the focus adjustment optical system 1311 may adjust the light concentration position of the processing light EL based on the irradiation position of the processing light EL on the inner wall surface Wsw11 so that each part of the inner wall surface Wsw11 is irradiated with the processing light EL that is properly condensed at each part of the inner wall surface Wsw11. Namely, the focus adjustment optical system 1311, which changes a relative positional relationship between the light concentration position of the processing light EL and each part of the surface of the workpiece W that is irradiated with the processing light EL, may adjust the light concentration position of the processing light EL based on the irradiation position of the processing light EL on the surface of the workpiece W so that each part of the surface of the workpiece W is irradiated with the processing light EL that is properly condensed at each part of the surface of the workpiece W. Specifically, the irradiation position of the processing light EL on the inner wall surface Wsw11 is changed by the above Galvano mirror 1312. Thus, focus adjustment optical system 1311 may adjust the light concentration position of the processing light EL in synchronization with the operation of the Galvano mirror 1312. Note that the change of the irradiation position of the processing light EL on the inner wall surface Wsw11 appears as the change of the position through which the processing light EL passes on the condensed plane 134IP of the relay optical system 134. Thus, it can be said that focus adjustment optical system 1311 adjusts the light concentration position of the processing light EL based on the position through which the processing light EL passes on the condensed plane 134IP of the relay optical system 134

The same is applied to the other inner wall surface Wsw12 to inner wall surface Wsw14. However, its detailed description is omitted for the purpose of reducing a redundant explanation.

Even in the example illustrated in FIG. 14, the objective optical system 135 may be aligned with respect to the workpiece W so that the surface of the workpiece W that is irradiated with the processing light EL is disposed to be symmetric with respect to the optical axis AX. For example, the objective optical system 135 may be aligned with respect to the workpiece W so that the inner wall surface Wsw11 to the inner wall surface Wsw14 are disposed to be symmetric (for example, circular-symmetric) with respect to the optical axis AX. In this case, when the objective optical system 135 condenses the processing light EL on either one of the inner wall surface Wsw11 to the inner wall surface Wsw14, a condensed plane on which the processing light EL is condensed is a plane that is optically conjugate with at least another one of the inner wall surface Wsw11 to the inner wall surface Wsw14. Namely, it can be said that the objective optical system 135 forms a conjugate plane that is optically conjugate with at least one of the plurality of surfaces Wsw of the workpiece W that are irradiated with the processing light EL.

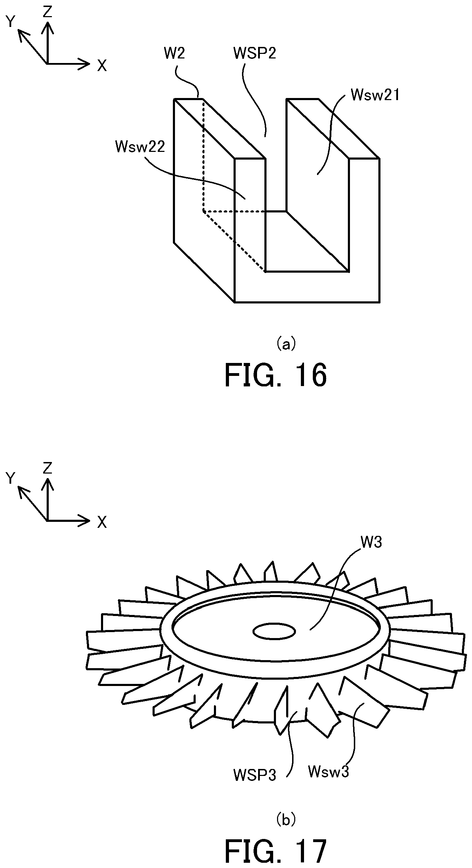

For example, as illustrated in FIG. 16 that is a perspective view illustrating another example of the workpiece W, the processing system SYSa may process a workpiece W2 in which a space WSP2 that is between two surfaces facing along one direction and that is opened in a direction intersecting with the one direction is formed. In an example illustrated in FIG. 16, the space WSP2 that is surrounded by the inner wall surface Wsw including an inner wall surface Wsw21 of the workpiece W facing toward the -X side and an inner wall surface Wsw22 of the workpiece W facing toward the +X side is formed in the workpiece W2. In this case, the processing system SYSa may process at least one of the inner wall surfaces Wsw21 to Wsw22 in a state where at least a part of the processing head 13 (especially, the head housing 137) is inserted into the space WSP2. The processing system SYSa may measure at least one of the inner wall surfaces Wsw21 to Wsw22 by detecting the measurement light RL from at least one of the inner wall surfaces Wsw21 to Wsw22 by the detection element 1322.

For example, as illustrated in FIG. 17 that is a perspective view illustrating another example of the workpiece W, the processing system SYSa may process a workpiece W3 at which a plurality of protrusions are formed. In an example illustrated in FIG. 17, the workpiece W3 is a turbine including a plurality of turbine blades. In this case, the processing system SYSa may process a surface Wsw3 of the turbine blade (namely, a surface of the protrusion) in a state where at least a part of the processing head 13 (especially, the head housing 137) is inserted into a space WSP3 between adjacent two turbine blades (namely, adjacent two protrusions). The processing system SYSa may measure the surface Wsw3 of the turbine blade (namely, the surface of the protrusion) by detecting the measurement light RL from the surface Wsw3 of the turbine blade (namely, the surface of the protrusion).

Even in the examples illustrated in FIG. 14 to FIG. 17 (furthermore, the example illustrated in FIG. 1), it can be said that the processing system SYSa processes and measures the workpiece W having the surface that is concave with respect to the processing head 13 (especially, the terminal optical member 1351). Therefore, the processing system SYSa may process and measure the workpiece W that is different from the workpieces W illustrated in FIG. 1 and FIG. 14 to FIG. 17 and that has the surface concave with respect to the processing head 13 (especially, the terminal optical member 1351).

Moreover, even in the examples illustrated in FIG. 14 to FIG. 17 (furthermore, the example illustrated in FIG. 1), it can be said that the processing system SYSa inserts the objective optical system 135 into a space, which is surrounded by the surface that is concave with respect to the processing head 13 (especially, the terminal optical member 1351), along a direction that intersects with a direction connecting at least two surfaces and processes and measures the surface that is concave with respect to the processing head 13 (especially, the terminal optical member 1351). In other words, even in the examples illustrated in FIG. 14 to FIG. 17 (furthermore, the example illustrated in FIG. 1), it can be said that the processing system SYSa inserts the objective optical system 135 into a space, which is between the at least two surfaces that face each other and that are included in the surface of the workpiece W, along a direction that intersects with a direction connecting at least two surfaces and irradiated the at least two surfaces with the processing light EL from the objective optical system 135. Therefore, the processing system SYSa may insert the objective optical system 135 into the space, which is surrounded by the surface that is concave with respect to the processing head 13 (especially, the terminal optical member 1351) and which is different from the workpieces W illustrated in FIG.1 and FIG. 14 to FIG. 17, along the direction that intersects with the direction connecting at least two surfaces and process and measure the surface that is concave with respect to the processing head 13 (especially, the terminal optical member 1351).

### (2) Processing System SYSb in Second Example Embodiment

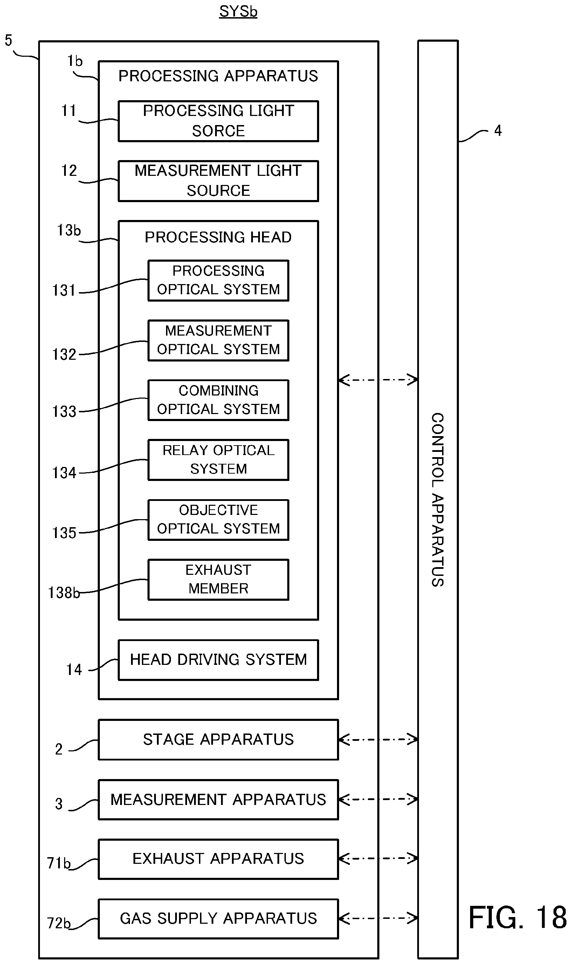

Next, with reference to FIG. 18, a processing system SYS in a second example embodiment (in the below described description, the processing system SYS in the second example embodiment is referred to as a "processing system SYSb") will be described. FIG. 18 is a system configuration diagram that illustrates a system configuration of the processing system SYSb in the second example embodiment. Note that a detailed description of a component that is same as the already described component is omitted by assigning the same reference sing to it.

As illustrated in FIG. 18, the processing system SYSb in the second example embodiment is different from the above described processing system SYSa in the first example embodiment in that it includes a processing apparatus 1b instead of the processing apparatus 1. The processing system SYSb is different from the above described processing system SYSa in that it includes an exhaust apparatus 71b and a gas supply apparatus 72b. Another feature of the processing system SYSb may be same as another feature of the processing system SYSa.

The processing apparatus 1b is different from the processing apparatus 1 in that it includes a processing head 13b instead of the processing head 13. Another feature of the processing apparatus 1b may be same as another feature of the processing apparatus 1. The processing head 13b is different from the processing head 13 in that it includes an exhaust and gas supply member 138b. Another feature of the processing head 13b may be same as another feature of the processing head 13.

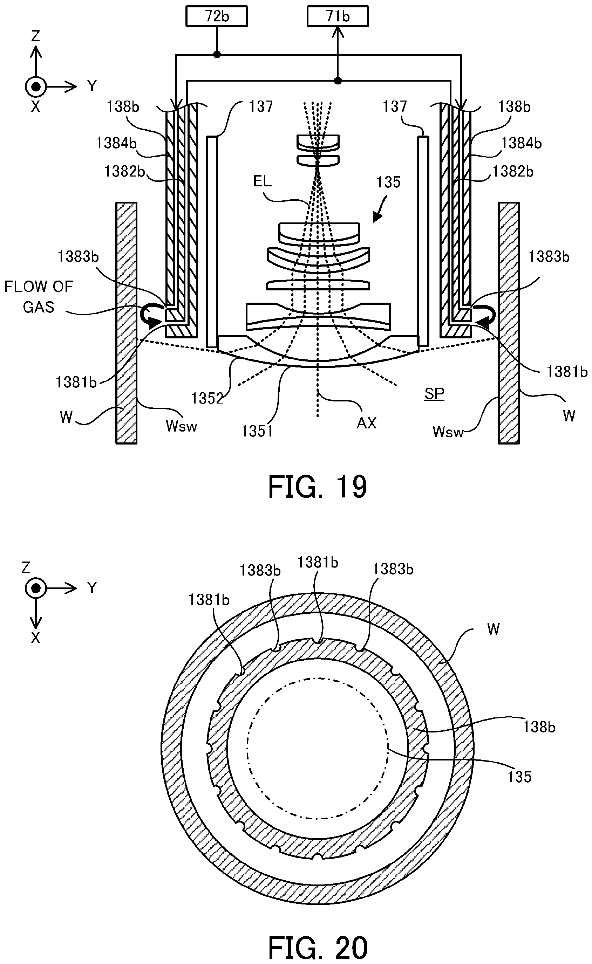

The exhaust and gas supply member 138b, the exhaust apparatus 71b and the gas supply apparatus 72b are used to suck a gas around the objective optical system 135 from a lateral space of the objective optical system 135. The exhaust and gas supply member 138b, the exhaust apparatus 71b and the gas supply apparatus 72b collects unnecessary substance (for example, fume) generated by the irradiation of the workpiece W with the processing light EL by sucking the gas around the objective optical system 135. Next, with reference to FIG. 19, the exhaust and gas supply member 138b, the exhaust apparatus 71b and the gas supply apparatus 72b will be described. FIG. 19 is a cross-sectional view that illustrates the exhaust and gas supply member 138b, the exhaust apparatus 71b and the gas supply apparatus 72b that suck the gas around the objective optical system 135 from the lateral space of the objective optical system 135.

As illustrated in FIG. 19, the exhaust and gas supply member 138b is disposed in the lateral space of the objective optical system 135. The exhaust and gas supply member 138b is disposed around the objective optical system 135. In this case, the exhaust and gas supply member 138b may be disposed to surround the objective optical system 135. Namely, the exhaust and gas supply member 138b may be a member that has a tubular shape and that may contain the objective optical system 135 in a tube.

When the objective optical system 135 is contained in the head housing 137, the exhaust and gas supply member 138b is disposed in a lateral space of the head housing 137. The exhaust and gas supply member 138b is disposed around the head housing 137. In this case, the exhaust and gas supply member 138b may be disposed to surround the head housing 137. Namely, the exhaust and gas supply member 138b may be a member that has a tubular shape extending along the Z axis direction along which the head housing 137 extends and that may contain the head housing 137 in a tube.

As described above, the objective optical system 135 is inserted into the space WSP formed in the workpiece W. In this case, the exhaust and gas supply member 138b is disposed between the workpiece W and the objective optical system 135. The exhaust and gas supply member 138b is disposed between the inner wall surface Wsw of the workpiece W facing the space WSP and the objective optical system 135. Incidentally, when the objective optical system 135 is contained in the head housing 137, the exhaust and gas supply member 138b is disposed between the workpiece W and the head housing 137 (namely, between the inner wall surface Wsw and the head housing 137).

An exhaust port 1381b is formed at the exhaust and gas supply member 138b. The exhaust port 1381b is formed at a surface of the exhaust and gas supply member 138b facing toward a side opposite to the objective optical system 135 side. The exhaust port 1381b is formed at a surface of the exhaust and gas supply member 138b that faces toward the workpiece W when the objective optical system 135 is inserted into the space WSP. Thus, when the objective optical system 135 is inserted into the space WSP, the exhaust port 1381b faces the workpiece W (especially, the inner wall surface Wsw facing the space WSP). Furthermore, an exhaust pipe 1382b is formed in the exhaust and gas supply member 138b. The exhaust pipe 1382b is connected to the exhaust port 1381b. The exhaust pipe 1382b is further connected to the exhaust apparatus 71b. The exhaust apparatus 71b sucks the gas around the objective optical system 135 through the exhaust port 1381b and the exhaust pipe 1382b. For example, the exhaust apparatus 71b sucks the gas from a space between the objective optical system 135 and the workpiece W (especially, the inner wall surface Wsw facing the space WSP). For example, the exhaust apparatus 71b sucks the gas from a space which the objective optical system 135 faces. As a result, the unnecessary substance existing in these space is collected. Note that the exhaust apparatus 71b, the exhaust port 1381b and the exhaust pipe 1382b may be referred to as a suction apparatus (a suction part), a suction port and a suction pipe.

Since the unnecessary substance is generated by the irradiation of the workpiece W with the processing light EL, the exhaust port 1381b may be disposed near a generation source of the unnecessary substance (namely, the irradiation position of the processing light EL on the surface of the workpiece W) in order to improve a collection efficiency of the unnecessary substance. For example, since the processing light EL is emitted from the terminal optical member 1351 of the objective optical system 135, the exhaust port 1381b may be formed near the terminal optical member 1351. Moreover, when the terminal optical member 1351 emits the processing light EL toward the direction that makes the angle of 90 degree or more with respect to the optical axis AX as described above (see FIG. 5), the generation source of the unnecessary substance is located at a position that is away from the optical surface 1352 of the terminal optical member 1351 toward the entrance side of the terminal optical member 1351 in the direction of the optical axis AX. Thus, the exhaust port 1381b may be formed at a position that is away from the optical surface 1352 of the terminal optical member 1351 toward the entrance side of the terminal optical member 1351 in the direction of the optical axis AX. Alternatively, the exhaust and gas supply member 138b may be aligned with respect to the objective optical system 135 so that the exhaust port 1381b is located near the terminal optical member 1351 or the exhaust port 1381b is located at a position that is away from the optical surface 1352 of the terminal optical member 1351 toward the entrance side of the terminal optical member 1351 in the direction of the optical axis AX.

An gas supply port 1383b is formed at the exhaust and gas supply member 138b. The gas supply port 1383b is formed at a surface of the exhaust and gas supply member 138b facing toward a side opposite to the objective optical system 135 side. The gas supply port 1383b is formed at a surface of the exhaust and gas supply member 138b that faces toward the workpiece W when the objective optical system 135 is inserted into the space WSP. Thus, when the objective optical system 135 is inserted into the space WSP, the gas supply port 1383b faces the workpiece W (especially, the inner wall surface Wsw facing the space WSP). Furthermore, an gas supply pipe 1384b is formed in the exhaust and gas supply member 138b. The gas supply pipe 1384b is connected to the gas supply port 1383b. The gas supply pipe 1384b is further connected to the gas supply apparatus 72b. The gas supply apparatus 72b supplies the gas around the objective optical system 135 through the gas supply port 1383b and the gas supply pipe 1384b. Namely, the gas supply apparatus 72b supplies the gas to a space between the objective optical system 135 and the workpiece W (especially, the inner wall surface Wsw facing the space WSP) through the gas supply port 1383b and the gas supply pipe 1384b. As a result, as illustrated in FIG. 19, a flow of the gas flowing from the gas supply port 1383b to the exhaust port 1381b is formed. In this case, for example, the flow of the gas along at least a part of the inner wall surface Wsw of the workpiece W may be formed. For example, the flow of the gas along at least a part of the annular processing shot area EA on the inner wall surface Wsw may be formed. For example, the flow of the gas along at least a part of a side surface of the head housing 137 (alternatively, a side surface of the objective optical system 135 or the terminal optical member 1351) may be formed. As a result, the unnecessary substance is collected more efficiently, compared to a case where the flow of the gas is not formed. Furthermore, since the gas is supplied from the gas supply port 1383b, there is less possibility that a pressure in a space around the objective optical system 135 is reduced too much even when the gas is sucked through the exhaust port 1381b.

The exhaust port 1381b and the gas supply port 1383b may be formed so that the exhaust port 1381b and the gas supply port 1383b are arranged along a direction along the optical axis AX of the objective optical system 135. In this case, the exhaust port 1381b is formed at a position that is closer to the terminal optical member 1351 than the gas supply port 1383b is. In this case, there is a higher possibility that the exhaust port 1381b is disposed near the generation source of the unnecessary substance. However, the exhaust port 1381b is formed at a position that is farther away from the terminal optical member 1351 than the gas supply port 1383b is.

The exhaust port 1381b and the gas supply port 1383b may be formed so that the exhaust port 1381b and the gas supply port 1383b are arranged along a direction surrounding the objective optical system 135 (namely, a circumferential direction). In an example illustrated in FIG. 19, the exhaust port 1381b and the gas supply port 1383b may be formed so that the exhaust port 1381b and the gas supply port 1383b are arranged around the Z axis. In this case, as illustrated in FIG. 20 that illustrated another example of the exhaust and gas supply member 138b, the exhaust ports 1381b and the gas supply ports 1383b may be formed so that the exhaust ports 1381b and the gas supply ports 1383b are alternately arranged around the Z axis. In this case, the unnecessary substance is collected more efficiently.

The above described processing system SYSb in the second example embodiment is capable of achieving an effect that is same as the effect achievable by the above described processing system SYSa in the first example embodiment. Furthermore, the processing system SYSb is capable of properly collecting the unnecessary substance generated by the irradiation of the workpiece W with the processing light EL. As a result, there is a relatively low possibility that the unnecessary substance is adhered to the terminal optical member 1351. Thus, there is a relatively low possibility that the irradiation of at least one of the processing light EL and the measurement light ML through the terminal optical member 1351 is prevented by the unnecessary substance adhered to the terminal optical member 1351. As a result, there is a relatively low possibility that at least one of the processing of the workpiece W by using the processing light EL and the measurement of the workpiece W by using the measurement light ML is prevented by the unnecessary substance.

Note that the gas supply port 1383b and the gas supply pipe 1384b may not be formed at the exhaust and gas supply member 138b. Furthermore, the processing system SYSb may not include the gas supply apparatus 72b. Even in this case, the fact remains that the unnecessary substance is collected by the exhaust port 1381b.

The exhaust port 1381b and the exhaust pipe 1382b may not be formed at the exhaust and gas supply member 138b. Furthermore, the processing system SYSb may not include the exhaust apparatus 71b. Even in this case, the flow of the gas is formed by the gas supply port 1383b. As a result, the flow of the gas formed by the gas supply port 1383b reduces a possibility that the unnecessary substance is adhered to the terminal optical member 1351, compared to a case where the flow of the gas is not formed. Therefore, there is a low possibility to some extent that at least one of the processing of the workpiece W by using the processing light EL and the measurement of the workpiece W by using the measurement light ML is prevented by the unnecessary substance.
the fact remains that the unnecessary substance is collected by the exhaust port 1381b.

### (3) Processing System SYSc in Third Example Embodiment

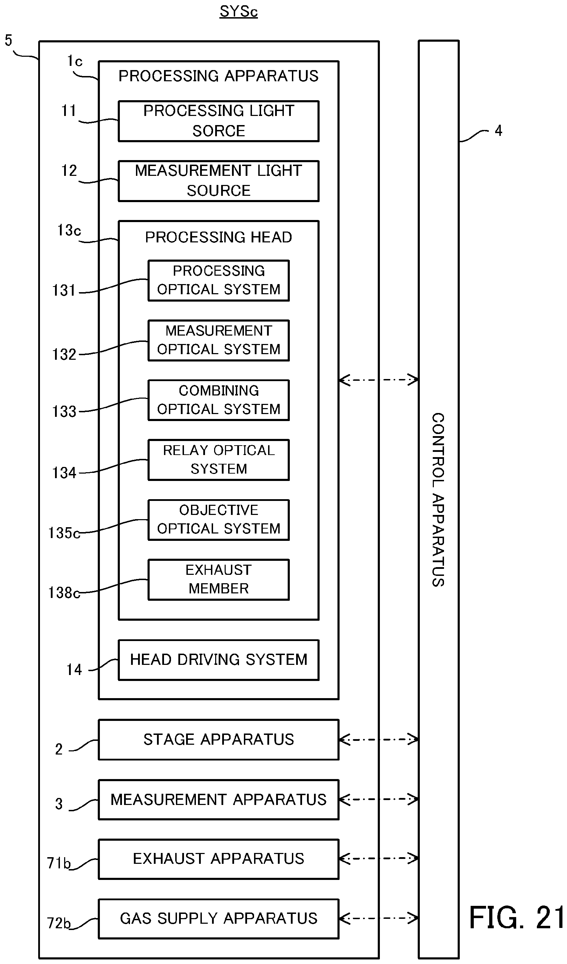

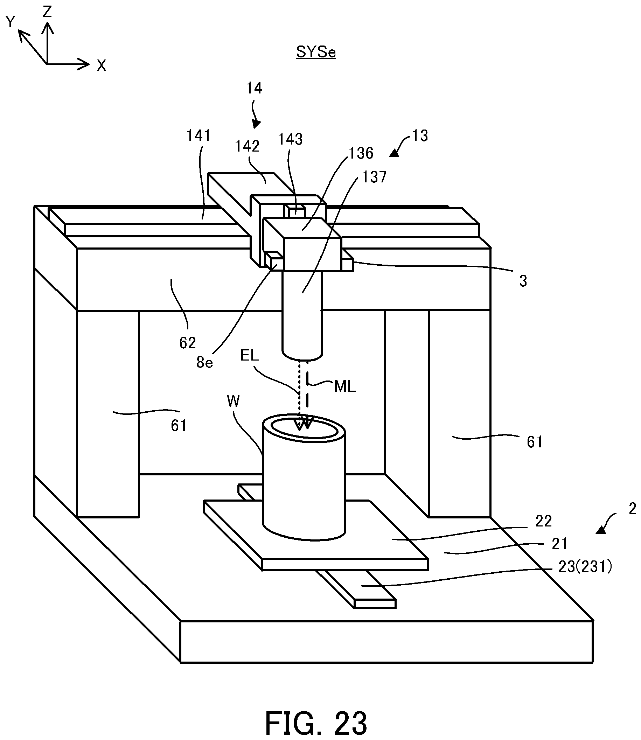

Next, with reference to FIG. 23, a processing system SYS in a third example embodiment (in the below described description, the processing system SYS in the third example embodiment is referred to as a "processing system SYSc") will be described. FIG. 21 is a system configuration diagram that illustrates a system configuration of the processing system SYSc in the third example embodiment. Note that a detailed description of a component that is same as the already described component is omitted by assigning the same reference sing to it.

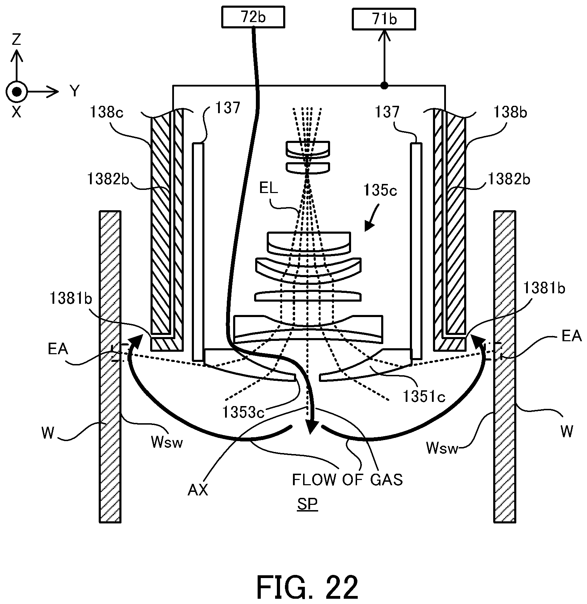

As illustrated in FIG. 21, the processing system SYSc in the third example embodiment is different from the above described processing system SYSb in the second example embodiment in that it includes a processing apparatus 1c instead of the processing apparatus 1b. Another feature of the processing system SYSc may be same as another feature of the processing system SYSb. The processing apparatus 1c is different from the processing apparatus 1b in that it includes a processing head 13c instead of the processing head 13b. Another feature of the processing apparatus 1c may be same as another feature of the processing apparatus 1b. The processing head 13c is different from the processing head 13b in that it includes an objective optical system 135c and an exhaust and gas supply member 138c instead of the objective optical system 135 and the exhaust and gas supply member 138b. Another feature of the processing head 13c may be same as another feature of the processing head 13b. Thus, with reference to FIG. 22, the objective optical system 135c and the exhaust and gas supply member 138 in the third example embodiment will be described. FIG. 22 is a cross-sectional view that illustrates the objective optical system 135c and the exhaust and gas supply member 138c in the third example embodiment.

As illustrated in FIG. 22, the exhaust and gas supply member 138c is different from the exhaust and gas supply member 138c in that the gas supply port 1383b and the gas supply pipe 1384b may not be formed. Another feature of the exhaust and gas supply member 138c may be same as another feature of the exhaust and gas supply member 138b.

The objective optical system 135c is different from the objective optical system 135 in that it includes a terminal optical member 1351c instead of the terminal optical member 1351. Another feature of the objective optical system 135c may be same as another feature of the objective optical system 135. The terminal optical member 1351c is different from the terminal optical member 1351 in that a through-hole 1353 that penetrates the terminal optical member 1351c along the optical axis AX is formed. Another feature of the terminal optical member 1351c may be same as another feature of the terminal optical member 1351.

The through-hole 1353c is used as a gas supply port for supplying the gas around the objective optical system 135c by the gas supply apparatus 72b. Namely, in the third example embodiment, the gas supply apparatus 72b supplies the gas around the objective optical system 135c through an inner space in the head housing 137 and the through-hole 1353c, as illustrated by a thick solid line in FIG. 22. For example, the gas supply apparatus 72b may supply the gas to a space which the terminal optical member 1351c faces (specifically, at least a part of the space WSP formed in the workpiece W). through the inner space in the head housing 137 and the through-hole 1353c. It can be said that the gas supply apparatus 72b supplies the gas around the objective optical system 135c from a tip of the objective optical system 135c, because the terminal optical member 1351c is located at the tip of the objective optical system 135c. As a result, as illustrated in FIG. 22, a flow of the gas flowing from the through-hole 1353c to the exhaust port 1381b is formed. Thus, the unnecessary substance is collected more efficiently, compared to a case where the flow of the gas is not formed.

However, as described above, it is preferable that the through-hole 1353c does not prevent the emission of the processing light EL toward the surface of the workpiece W, because the terminal optical member 1351c is an optical system that emits the processing light EL toward the surface of the workpiece W. Thus, the through-hole 1353c is not formed at one part of the terminal optical member 1351c through which the processing light EL, which is actually used to process the workpiece W, passes. The through-hole 1353c is formed at another part of the terminal optical member 1351c through which the processing light EL, which is actually used to process the workpiece W, does not pass. As a result, even when the through-hole 1353c is formed in the terminal optical member 1351c, the objective optical system 135c is capable of properly emitting the processing light EL toward the surface of the workpiece W. Namely, the objective optical system 135c is capable of properly irradiating the processing shot area EA on the surface of the workpiece W with the processing light EL. Note that the above described processing shot area EA is irradiated with the processing light EL that is actually used to process the workpiece W, as described above. Thus, it can be said that the through-hole 1353c is not formed at one part of the terminal optical member 1351c through which the processing light EL, which propagates toward the processing shot area EA on the surface of the workpiece W, passes. Namely, it can be said that the through-hole 1353c is not formed at another part of the terminal optical member 1351c through which the processing light EL, which does not propagate toward the processing shot area EA on the surface of the workpiece W, passes. Note that the through-hole 1353c may be typically formed in an area including an optical axis of the terminal optical member 1351c (namely, the optical axis AX).

The above described processing system SYSc in the third example embodiment is capable of achieving an effect that is same as the effect achievable by the above described processing system SYSb in the second example embodiment.

### (4) Processing System SYSd in Fourth Example Embodiment

Next, with reference to FIG. 23, a processing system SYS in a fourth example embodiment (in the below described description, the processing system SYS in the fourth example embodiment is referred to as a "processing system SYSd") will be described. FIG. 23 is a perspective view that conceptionally illustrates an exterior appearance of the processing system SYSd in the fourth example embodiment.

As illustrated in FIG. 23, the processing system SYSd in the fourth example embodiment is different from the above described processing system SYSa in the first example embodiment in that it includes a distance sensor 8d. Another feature of the processing system SYSd may be same as another feature of the processing system SYSa.

The distance sensor 8d may be disposed at the processing head 13. In this case, even when the processing head 13 moves, a positional relationship between the processing head 13 and the distance sensor 8d does not change. Alternatively, the distance sensor 8d may be disposed at a position, wherein a positional relationship between this position and the processing head 13 is fixed. The relative positional relationship between the distance sensor 8d and the processing head 13 may be an information that is already known to the control apparatus 4.

The distance sensor 8d is configured to measure a distance between the distance sensor 8d and the workpiece W. Since the positional relationship between the distance sensor 8d and the processing head 13 is fixed, an information related to the distance between the distance sensor 8d and the workpiece W may be regarded to be substantially equivalent to an information related to a distance between the processing head 13 and the workpiece W. Namely, it can be said that a measured result by the distance sensor 8d includes the information related to the distance between the processing head 13 and the workpiece W.

The control apparatus 4 is configured to determine based on the measured result by the distance sensor 8d whether or not the distance between the processing head 13 and the workpiece W is shorter than an allowable lower limit value. When it is determined that the distance between the processing head 13 and the workpiece W is shorter than the allowable lower limit value, it is estimated that the processing head 13 may possibly collide with the workpiece W. Thus, in this case, the control apparatus 4 may control the relative positional relationship between the processing head 13 and the workpiece W to prevent the processing head 13 from colliding with the workpiece W. For example, the control apparatus 4 may control the relative positional relationship between the processing head 13 and the workpiece W so that the processing head 13 is farther away from the workpiece W.

The above described processing system SYSd in the fourth example embodiment is capable of achieving an effect that is same as the effect achievable by the above described processing system SYSa in the first example embodiment. Furthermore, the processing system SYSd is capable of properly preventing the collision between the processing head 13 and the workpiece W. Especially, the processing system SYSd is capable of properly preventing the collision between the processing head 13 and the workpiece W in a situation where there is a relatively high possibility that the processing head 13 collides with the workpiece W because the processing head 13 is inserted into the space WSP formed in the workpiece W.

Note that at least one of the processing system SYSb in the second example embodiment to the processing system SYSc in the third example embodiment described above may include a feature unique to the processing system SYSd in the fourth example embodiment. The feature unique to the processing system SYSd in the fourth example embodiment may include a feature related to the distance sensor 8d.

### (5) Processing System SYSe in Fifth Example Embodiment

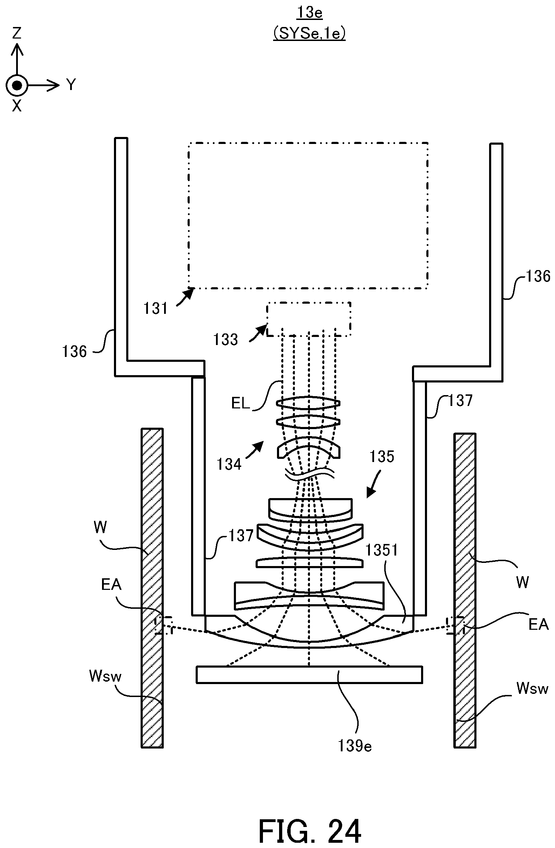

Next, a processing system SYS in a fifth example embodiment (in the below described description, the processing system SYS in the fifth example embodiment is referred to as a "processing system SYSe") will be described. The processing system SYSe in the fifth example embodiment is different from the above described processing system SYSa in the first example embodiment in that it includes a processing apparatus 1e instead of the processing apparatus 1.. Another feature of the processing system SYSe may be same as another feature of the processing system SYSa. The processing apparatus 1e is different from the processing apparatus 1 in that it includes a processing head 13e instead of the processing head 13. Another feature of the processing apparatus 1e may be same as another feature of the processing apparatus 1. Thus, next, with reference to FIG. 24, the processing head 13e in the fifth example embodiment will be described. FIG. 24 is a cross-sectional view that illustrates a configuration of the processing head 13e in the fifth example embodiment.

As illustrated in FIG. 24, the processing head 13e is different from the processing head 13 in that it includes a light shield member 139e. Another feature of the processing head 13e may be same as another feature of the processing head 13.

The light shield member 139e is disposed on a part of the optical path of the processing light EL emitted from the objective optical system 135. The light shield member 139e is disposed on the optical path of the processing light EL that is not actually used to process the workpiece W. As a result, the processing light EL that is not actually used to process the workpiece W is shielded by the light shield member 139e. On the other hand, the light shield member 139e is not disposed on the optical path of the processing light EL that is actually used to process the workpiece W. As a result, the processing light EL that is actually used to process the workpiece W is not shielded by the light shield member 139e.

As described above, the processing light EL that is actually used to process the workpiece W is typically the processing light EL with which the processing shot area EA on the surface of the workpiece W is irradiated. Thus, the light shield member 139e is disposed on the optical path of the processing light EL with which the processing shot area EA is not irradiated (namely, with which the surface of the workpiece W that does not overlap with the processing shot area EA is irradiated). As a result, the processing light EL with which the processing shot area EA is not irradiated (namely, with which the surface of the workpiece W that does not overlap with the processing shot area EA is irradiated) is shielded by the light shield member 139e. On the other hand, the light shield member 139e is not disposed on the optical path of the processing light EL with which the processing shot area EA is irradiated. As a result, the processing light EL with which the processing shot area EA is irradiated is not shielded by the light shield member 139e.

The above described processing system SYSe in the fifth example embodiment is capable of achieving an effect that is same as the effect achievable by the above described processing system SYSa in the first example embodiment. Furthermore, in the fifth example embodiment, there is a relatively low possibility that an undesired part (namely, a part that should not be irradiated with the processing light EL) of the surface of the workpiece W is erroneously irradiated with the processing light EL. Thus, the processing system SYSe is capable of processing the workpiece W more properly.

Note that each of the processing system SYSa in the first example embodiment to the processing system SYSd in the fourth example embodiment described above may control the Galvano mirror 1312 to prevent the undesired part (namely, the part that should not be irradiated with the processing light EL) of the surface of the workpiece W from being erroneously irradiated with the processing light EL. As a result, each of the processing system SYSa to the processing system SYSd that does not include the light shield member 139e is also capable of processing the workpiece W more properly, as with the processing system SYSe.

Note that at least one of the processing system SYSb in the second example embodiment to the processing system SYSd in the fourth example embodiment described above may include a feature unique to the processing system SYSe in the fifth example embodiment. The feature unique to the processing system SYSe in the fifth example embodiment may include a feature related to the light shield member 139e.

### (6) Processing System SYSf in Sixth Example Embodiment

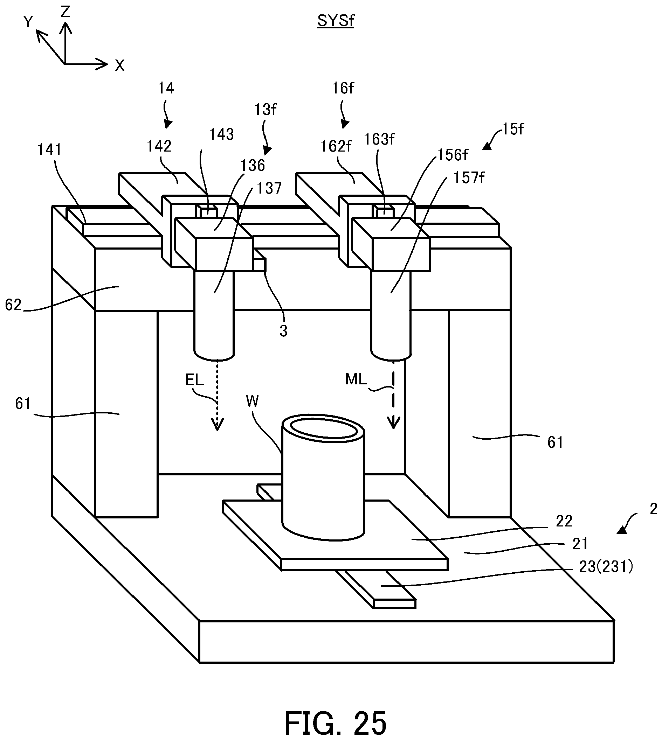

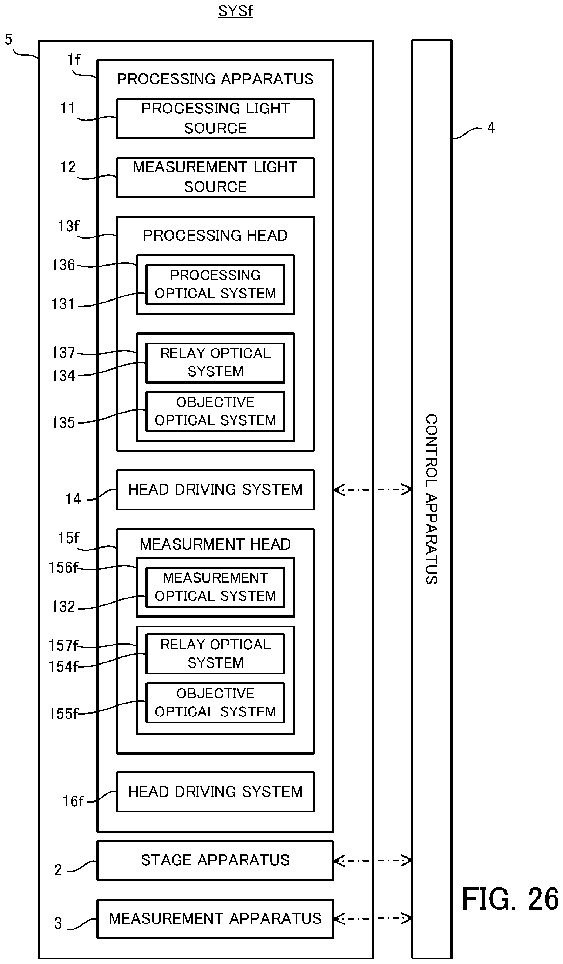

Next, with reference to FIG. 25 and FIG. 26, a processing system SYS in a sixth example embodiment (in the below described description, the processing system SYS in the sixth example embodiment is referred to as a "processing system SYSf') will be described. FIG. 25 is a perspective view that conceptionally illustrates an exterior appearance of the processing system SYSf in a sixth example embodiment. FIG. 26 is a system configuration diagram that illustrates a system configuration of the processing system SYSf in the sixth example embodiment.

As illustrated in FIG. 26, the processing system SYSf in the sixth example embodiment is different from the above described processing system SYSa in the first example embodiment in that it includes a processing apparatus 1f instead of the processing apparatus 1.. Another feature of the processing system SYSf may be same as another feature of the processing system SYSa.

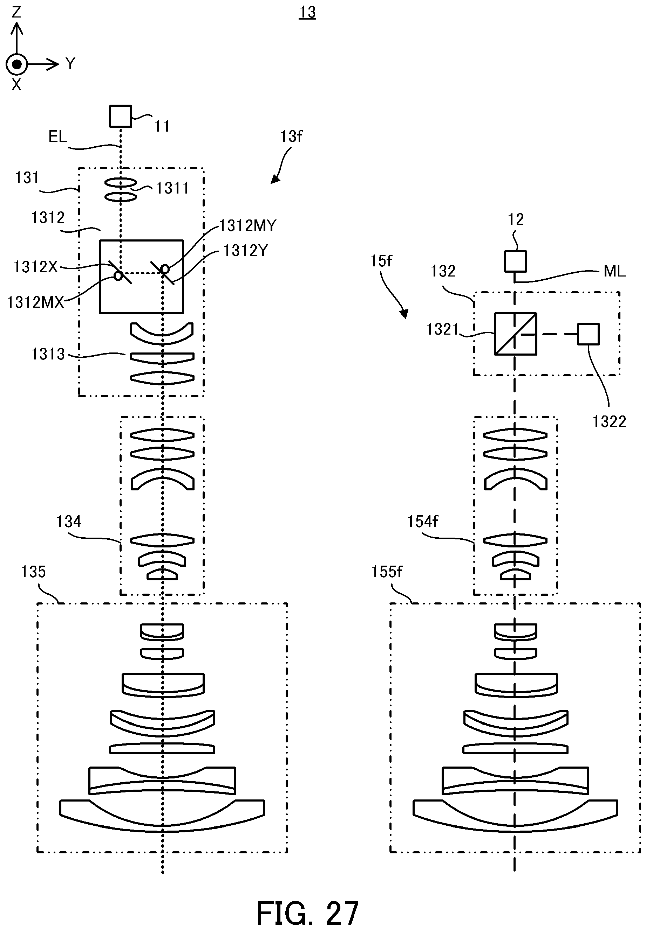

The processing apparatus 1f is different from the processing apparatus 1 in that it includes, instead of the processing head 13, a processing head 13f that is configured to process the workpiece W by using the processing light EL and that may not be configured to measure the workpiece W by using the measurement light ML. The processing apparatus 1f is different from the processing apparatus 1 in that it includes: a measurement head 15f that is configured to measure the workpiece W by using the measurement light ML; and a head driving system 16f that is configured to move the measurement head 15f. Namely, the processing apparatus 1f is different from the processing apparatus 1 in that the head that is configured to process the workpiece W by using the processing light EL is separated from the head that is configured to measure the workpiece W by using the measurement light ML. Another feature of the processing apparatus 1f may be same as another feature of the processing apparatus 1. Next, with reference to FIG. 27 that is a cross-sectional view illustrating a configuration of the processing head 13f and the measurement head 15f in addition to FIG. 25 to FIG. 26, the processing apparatus 1f that includes the processing head 13f and the measurement head 15f will be described more.

The processing head 13f is different from the processing head 13 in that it may not include the measurement optical system 132 and the combining optical system 133. Thus, the processing light EL from the processing optical system 131 enters the relay optical system 134 without passing through the combining optical system 133. Another feature of the processing head 13f may be same as another feature of the processing head 13.

The measurement head 15f includes the measurement optical system 132, a relay optical system 154f and an objective optical system 155f. The measurement optical system 132 is contained in a head housing 156f. The relay optical system 154f and the objective optical system 155f are contained in a head housing 157f. However, the measurement optical system 132 may not be contained in the head housing 156f. The relay optical system 154f and the objective optical system 155f may not be contained in the head housing 157f. Note that the head housing 156f may have a feature same as that of the above described head housing 136. The head housing 157f may have a feature same as that of the above described head housing 137. Thus, a detailed description of the head housings 156f and 157f is omitted.

The measurement light ML from the measurement optical system 132 enters the relay optical system 154f. The relay optical system 154f emits, toward the objective optical system 155f, the measurement light ML that has entered the relay optical system 154f. The measurement light ML from the relay optical system 154f enters the objective optical system 155f. The objective optical system 155f emits, toward the workpiece W, the measurement light ML that has entered the objective optical system 155f. Here, the relay optical system 154f and the objective optical system 155f may have feature same as those of the relay optical system 134 and the objective optical system 135 described above, respectively. Thus, the measurement head 15f is capable of irradiating the workpiece W with the measurement light ML and detecting the measurement light RL from the workpiece W, as with the above described processing head 13.

The head driving system 16f moves the measurement head 15f along at least one of the X axis direction, the Y axis direction, the Z axis direction, the θX direction, the θY direction and the θZ direction. FIG. 25 illustrates an example in which the head driving system 16f moves the measurement head 15f along each of the X axis direction and the Z axis direction. In this case, the head driving system 14 includes a X stage member 162f that is connected to the X slide member 141 to be movable along the X slide member 141 and a Z slide member 163f that is connected to the X stage member 162f and that extends along the Z axis direction, for example. The measurement head 15f (in an example illustrated in FIG. 1, the head housing 156f of the measurement head 15f) is connected to the Z slide member 163f to be movable along the Z slide member 163f. When the X stage member 162f moves along the X slide member 141, the measurement head 15f that is connected to the X stage member 162f through the Z slide member 163f moves along the X axis direction. Moreover, the measurement head 15f moves along the Z slide member 163f. Thus, the measurement head 15f is movable along each of the X axis direction and the Z axis direction.

The above described processing system SYSf in the sixth example embodiment is capable of achieving an effect that is same as the effect achievable by the above described processing system SYSa in the first example embodiment.

Note that at least one of the processing system SYSb in the second example embodiment to the processing system SYSe in the fifth example embodiment described above may include a feature unique to the processing system SYSf in the sixth example embodiment. The feature unique to the processing system SYSf in the sixth example embodiment may include a feature related to the separation of the processing head 13f and the measurement head 15f.

### (7) Processing System SYSg in Seventh Example Embodiment

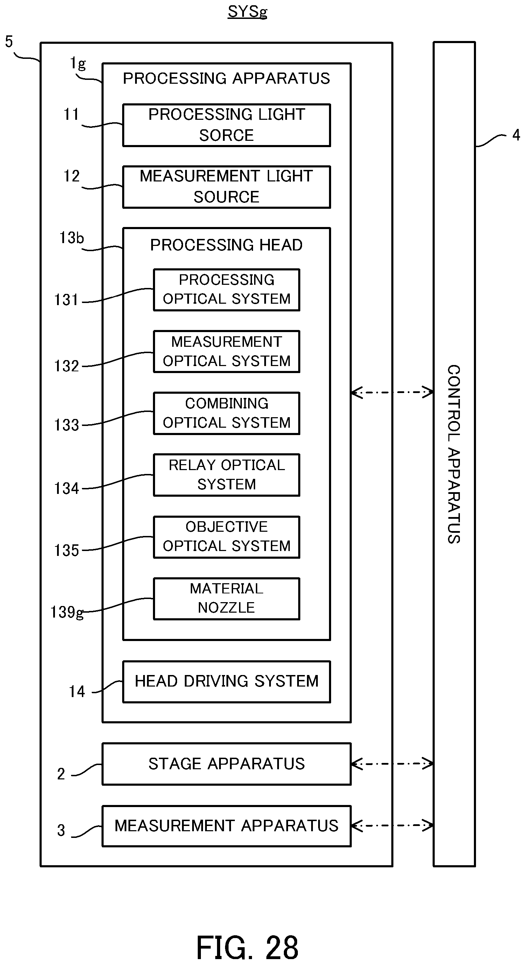

Next, with reference to FIG. 28, a processing system SYS in a seventh example embodiment (in the below described description, the processing system SYS in the seventh example embodiment is referred to as a "processing system SYSg") will be described. FIG. 28 is a system configuration diagram that illustrates a system configuration of the processing system SYSg in the seventh example embodiment.

As illustrated in FIG. 27, the processing system SYSg in the seventh example embodiment is different from the above described processing system SYSa in the first example embodiment in that it includes a processing apparatus 1g instead of the processing apparatus 1. Another feature of the processing system SYSg may be same as another feature of the processing system SYSa. The processing apparatus 1g is different from the processing apparatus 1 in that it includes a processing head 13g instead of the processing head 13. Another feature of the processing apparatus 1g may be same as another feature of the processing apparatus 1. The processing head 13g is different from the processing head 13 in that it is configured to perform an additive processing on the workpiece W. Namely, the processing head 13g is different from the processing head 13 in that it is configured to form a three-dimensional structural object (namely, a three-dimensional object having a size in each of three-dimensional directions, and a solid object) on the workpiece W. Another feature of the processing head 13g may be same as another feature of the processing head 13.

The processing head 13g may be configured to form the three-dimensional structural object by a Laser Metal Deposition. Namely, it can be said that the processing system SYSg is a 3D printer that forms an object by using an Additive layer manufacturing technique. Note that the Additive layer manufacturing technique may be referred to as a Rapid Prototyping, a Rapid Manufacturing or an Additive Manufacturing.

When the three-dimensional structural object is formed by the Laser Metal Deposition, the processing head 13g includes a material nozzle 139g. The material nozzle 139g is a material supply member (a power supply member) that is configured to supply a build material M to the workpiece W. The material nozzle 139g may supply the build material M to the irradiation position of the processing light EL. As a result, a melt pool is formed on the workpiece W by an energy transmitted from the processing light EL and the build material M is molten in the melt pool. Then, when the build material is not irradiated with the processing light EL the molten build material M is solidified. The processing head 13g may repeat the same operation to form the three-dimensional structural object formed by the solidified build material M.

Note that the processing apparatus 1g may include the processing head 13 for performing the removal processing and a processing head for performing the additive processing separately. In this case, the processing head for performing the additive processing may include an irradiation optical system that irradiates the workpiece W with a processing light for the additive processing and the material nozzle 139g that supplies the build material to an irradiation position of the processing light for the additive processing.

### (8) Other Modified Example

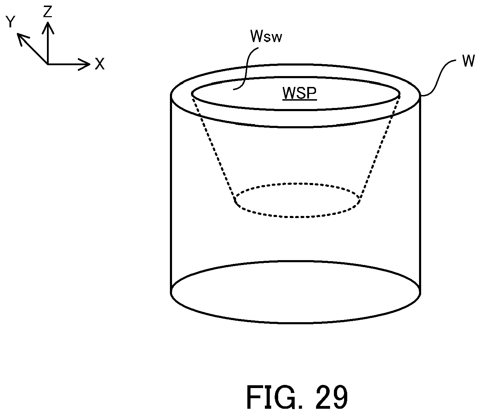

In the above described description, the inner wall surface Wsw of the workpiece W is vertical (namely, vertical with respect to at least one of the bottom surface of the workpiece W, the X axis and the Y axis). However, as illustrated in FIG. 29, the inner wall surface Wsw of the workpiece W may be inclined with respect to the bottom surface of the workpiece W. Alternatively, the inner wall surface Wsw of the workpiece W may be inclined with respect to the gravity direction. In other words, a size or a shape of an upper end of a space surrounded by the inner wall surface Wsw of the workpiece W may be different from a size or a shape of an lower end of this space.

In the above described description, the processing apparatus 1 is configured to measure the workpiece W by using the measurement light ML. However, the processing apparatus 1 may not be configured to measure the workpiece W by using the measurement light ML. In this case, the processing apparatus 1 may not include a component related to the measurement of the workpiece W. For example, the processing apparatus 1 may not include the measurement light source 12, the measurement optical system 132 and the combining optical system 133.

In the above described description, the stage apparatus 2 includes the stage driving system 23. However, the stage apparatus 2 may not include the stage driving system 23. Namely, the stage 22 may not be movable. In the above described description, the processing apparatus 1 includes the head driving system 14. However, the processing apparatus 1 may not include the head driving system 14. Namely, the processing head 13 may not be movable.

In the above described description, the processing apparatus 1 processes the workpiece W by irradiating the workpiece W with the processing light EL. However, the processing apparatus 1 may process the workpiece W by irradiating the workpiece W with any energy beam (this energy beam may be referred to as "a processing beam") that is different from a light. In this case, the processing apparatus 1 may include a beam irradiation apparatus that is configured to emit any energy beam in addition to or instead of the processing light source 11. At least one of a charged particle beam, an electromagnetic wave and the like is one example of any energy beam. A least one of an electron beam, an ion beam and the like is one example of the charged particle beam.

The features of each example embodiment described above may be appropriately combined with each other. A part of the features of each example embodiment described above may not be used. Moreover, the disclosures of all publications and United States patents related to an apparatus and the like cited in each embodiment described above are incorporated in the disclosures of the present application by reference if it is legally permitted.

The present invention is not limited to the above described examples and is allowed to be changed, if desired, without departing from the essence or spirit of the invention which can be read from the claims and the entire specification, and a processing apparatus, which involves such changes, are also intended to be within the technical scope of the present invention.

### Description of Reference Codes

- 1: processing apparatus
- 11: processing light source
- 12: measurement light source
- 13: processing head
- 131: processing optical system
- 132: measurement optical system
- 133: combining optical system
- 134: relay optical system
- 135: objective optical system
- 1351: terminal optical member
- EL: processing light
- ML: measurement light
- W: workpiece
- SYS: processing system

## Claims

1. A processing apparatus that is configured to process an object by a processing light from a processing light source, wherein
the processing apparatus comprises:
a first optical system that is configured to condense the processing light from the processing light source on a condensed plane; and
a second optical system that is configured to condense the processing light from the first optical system to irradiate the object with it,
a position in the condensed plane through which the processing light passes is changeable,
a propagating direction of the processing light propagating from the first optical system to the second optical system changes depending on the passing position.

2. The processing apparatus according to claim 1, wherein
an angle between an optical path of the first optical system and a first axis that is along a propagating direction of the processing light condensed at a first position on the condensed plane is larger than an angle between the optical path and a second axis that is along a propagating direction of the processing light condensed at a second position, which is closer to the optical axis than the first axis is, on the condensed plane.

3. The processing apparatus according to claim 1 or 2, wherein
an exit pupil of the first optical system is located at a position that is away from the condensed plane toward a side opposite to an object side.

4. The processing apparatus according to claim 2 or 3, wherein
an entrance pupil of the second optical system is located at a position that is away from the condensed position toward an object side.

5. The processing apparatus according to any one of claims 1 to 4 further comprising a condensed position change member that changes a condensed position in a propagating direction of the processing light.

6. The processing apparatus according to claim 5, wherein
the condensed position change member changes the condensed position of the processing light in the propagating direction based on the position in the condensed plane through which the processing light passes.

7. The processing apparatus according to any one of claims 1 to 6, wherein
a position of the processing light with which the object is irradiated is changed by a change of the position in the condensed plane through which the processing light passes.

8. The processing apparatus according to any one of claims 1 to 7 further comprising an exit direction change member that is disposed on an optical path of the processing light between the processing light source and the first optical system and that changes a direction along which the processing light is emitted.

9. The processing apparatus according to claim 8, wherein
the position in the condensed plane through which the processing light passes changes by means of the exit direction change member changing the direction along which the processing light is emitted.

10. The processing apparatus according to claim 8 or 9, wherein
the first optical system includes:
a condensed member that condenses the processing light from the exit direction change member on an intermediate condensed plane; and
a relay optical system that allows the intermediate condensed plane to be optically conjugate with the condensed plane.

11. The processing apparatus according to claim 10, wherein
the relay optical system forms a reduced image of the intermediate condensed plane on the condensed plane.

12. The processing apparatus according to any one of claims 8 to 10, wherein
the direction along which the processing light is emitted by the exit direction change member is set in consideration of a projection characteristic of the second optical system.

13. The processing apparatus according to any one of claims 1 to 12, wherein
the condensed plane is located between two optical members of optical members included in the first and second optical systems.

14. The processing apparatus according to any one of claims 1 to 13 further comprising a measurement part that is configured to measure a surface of the object by optically receiving, through the second optical system, a light from the surface of the object as a measurement light.

15. The processing apparatus according to claim 14, wherein
the measurement part includes a imaging element that is configured to capture an image of the surface two-dimensionally.

16. The processing apparatus according to any one of claims 1 to 15, wherein
the second optical system emits the processing light toward a surface of the object that intersects with a plane perpendicular to an optical axis of the second optical system.

17. The processing apparatus according to any one of claims 1 to 16, wherein
the second optical system emits the processing light by an angle equal to or larger than 90 degree with respect to an optical axis of the second optical system.

18. The processing apparatus according to claim 16 or 17 further comprising a movable optical member that is disposed on an optical path of the processing light from the processing light source,
an irradiation position of the processing light with which the object is irradiated is changed by moving the movable optical member.

19. The processing apparatus according to claim 18, wherein
a condensed position of the processing light from the second optical system is changed in an annular area surrounding an optical axis of the second optical system.

20. The processing apparatus according to claim 19, wherein
a surface of the annular area faces toward the optical axis side.

21. The processing apparatus according to any one of claims 1 to 20, wherein
an optical member of optical members included in the second optical system that is located at the most object side along an optical path of the processing light includes a lens.

22. The processing apparatus according to claim 21, wherein
a lens surface of the lens at the object side is a convex plane.

23. The processing apparatus according to claim 21 or 22, wherein
a lens surface of the lens at an entrance side of the processing light is a concave plane.

24. The processing apparatus according to any one of claims 21 to 23, wherein
the lens has a meniscus shape in which a convex plane faces toward an exit side of the processing light.

25. The processing apparatus according to any one of claims 1 to 24, wherein
a position on the object that is irradiated with the processing light emitted from an optical member of optical members included in the second optical system that is located at the most object side along an optical path of the processing light is located at a position that is away from an object-side optical surface of the optical member located at the most object side toward an entrance side of the optical member located at the most object side along an optical axis direction of the second optical system.

26. The processing apparatus according to any one of claims 1 to 25, wherein
the second optical system emits the processing light, toward a surface intersecting with a plane perpendicular to an optical axis of an optical member that is located at the most object side along an optical path of the irradiation optical system among optical members having a power included in the irradiation optical system, from the optical member.

27. The processing apparatus according to any one of claims 1 to 26, wherein
the processing light from the second optical system is condensed on a surface that is concave with respect to an optical member of optical members included in the second optical system that is located at the most object side.

28. The processing apparatus according to any one of claims 1 to 27, wherein
the second optical system forms a condensed spot of the processing light on a surface surrounding an optical axis of the second optical system.

29. The processing apparatus according to any one of claims 1 to 28 further comprising a suction part that is configured to suck a gas around the second optical system from a lateral space of the second optical system.

30. The processing apparatus according to any one of claims 1 to 29 further comprising a supply part that is configured to supply a gas from a tip of the second optical system.

31. A processing apparatus that is configured to process an object by a processing light from a processing light source, wherein
the processing apparatus comprises an irradiation optical system that is configured to condense the processing light to irradiate the object with it,
the irradiation optical system emitting the processing light toward a surface that intersects with a plane perpendicular to an optical axis of the irradiation optical system.

32. The processing apparatus according to claim 31 further comprising a movable optical member that is disposed on an optical path of the processing light from the processing light source,
an irradiation position of the processing light with which the object is irradiated is changed by moving the movable optical member.

33. The processing apparatus according to claim 32, wherein
a condensed position of the processing light from the irradiation optical system is changed in an annular area surrounding an optical axis of the irradiation optical system.

34. The processing apparatus according to claim 33, wherein
a surface of the annular area faces toward the optical axis side.

35. The processing apparatus according to any one of claims 31 to 34, wherein
an optical member of optical members included in the irradiation optical system that is located at the most object side along an optical path of the processing light includes a lens.

36. The processing apparatus according to claim 35, wherein
a lens surface of the lens at the object side is a convex plane.

37. The processing apparatus according to claim 35 or 36, wherein
a lens surface of the lens at an entrance side of the processing light is a concave plane.

38. The processing apparatus according to any one of claims 35 to 37, wherein
the lens has a meniscus shape in which a convex plane faces toward an exit side of the processing light.

39. The processing apparatus according to any one of claims 31 to 38, wherein
a position on the object that is irradiated with the processing light emitted from an optical member of optical members included in the irradiation optical system that is located at the most object side along an optical path of the processing light is located at a position that is away from an object-side optical surface of the optical member located at the most object side toward an entrance side of the optical member located at the most object side along an optical axis direction of the irradiation optical system.

40. The processing apparatus according to any one of claims 31 to 39, wherein
the irradiation optical system emits the processing light, toward a surface intersecting with a plane perpendicular to an optical axis of an optical member that is located at the most object side along an optical path of the irradiation optical system among optical members having a power included in the irradiation optical system, from the optical member.

41. The processing apparatus according to any one of claims 31 to 40, wherein
the irradiation optical system emits the processing light by an angle equal to or larger than 90 degree with respect to an optical axis of the irradiation optical system.

42. The processing apparatus according to any one of claims 31 to 41, wherein
the processing light from the irradiation optical system is condensed on a surface that is concave with respect to an optical member of optical members included in the irradiation optical system that is located at the most object side.

43. The processing apparatus according to any one of claims 31 to 42, wherein
the irradiation optical system forms a condensed spot of the processing light on a surface surrounding the optical axis.

44. The processing apparatus according to any one of claims 31 to 43, wherein
the irradiation optical system includes:
a first optical system that is configured to condense the processing light from the processing light source on a condensed plane; and
a second optical system that is configured to condense the processing light from the first optical system to irradiate the object with it.

45. The processing apparatus according to claim 44, wherein
a position in the condensed plane through which the processing light passes is changeable,
a propagating direction of the processing light propagating from the first optical system to the second optical system changes depending on the passing position.

46. The processing apparatus according to claim 45, wherein
an angle between an optical path of the first optical system and a first axis that is along a propagating direction of the processing light condensed at a first position on the condensed plane is larger than an angle between the optical path and a second axis that is along a propagating direction of the processing light condensed at a second position, which is closer to the optical axis than the first axis is, on the condensed plane.

47. The processing apparatus according to an one of claims 44 to 46, wherein
the first optical system includes:
a condensed member that condenses the processing light from the processing light source on an intermediate condensed plane; and
a relay optical system that allows the intermediate condensed plane to be optically conjugate with the condensed plane.

48. The processing apparatus according to claim 47, wherein
the relay optical system forms a reduced image of the intermediate condensed plane on the condensed plane.

49. The processing apparatus according to any one of claims 31 to 48 further comprising a condensed position change member that changes a condensed position in a propagating direction of the processing light.

50. The processing apparatus according to claim 49, wherein
a position through which the processing light passed on an intermediate condensed plane perpendicular to the optical path in the irradiation optical system is changeable,
the condensed position change member changes the condensed position of the processing light in the propagating direction based on the position through which the processing light passes on the intermediate condensed plane.

51. The processing apparatus according to any one of claims 31 to 50 further comprising an exit direction change member that is disposed on an optical path of the processing light from the processing light source and that changes a direction along which the processing light is emitted.

52. The processing apparatus according to claim 51, wherein
an irradiation position of the processing light with which the object is irradiated changes by means of the exit direction change member changing the direction along which the processing light is emitted.

53. The processing apparatus according to claim 51 or 52, wherein
the irradiation optical system includes:
a first optical system that is configured to condense the processing light from the processing light source on a condensed plane; and
a second optical system that is configured to condense the processing light from the first optical system to irradiate the object with it,
the direction along which the processing light is emitted by the exit direction change member is set in consideration of a projection characteristic of the second optical system.

54. The processing apparatus according to any one of claims 31 to 53 further comprising a measurement part that is configured to measure a surface of the object by optically receiving, through the irradiation optical system, a light from the surface of the object as a measurement light.

55. The processing apparatus according to claim 54, wherein
the measurement part includes a imaging element that is configured to capture an image of the surface two-dimensionally.

56. The processing apparatus according to any one of claims 31 to 55 further comprising a suction part that is configured to suck a gas around the irradiation optical system from a lateral space of the irradiation optical system.

57. The processing apparatus according to claim 56, wherein
the suction part forms a flow of the gas along a surface of the object.

58. The processing apparatus according to any one of claims 31 to 57 further comprising a supply part that is configured to supply a gas from a tip of the irradiation optical system.

59. A processing apparatus that is configured to process an object by a processing light from a processing light source, wherein
the processing apparatus comprises:
an irradiation optical system that is configured to condense the processing light to irradiate the object with it; and
a movable optical member that is movable to change an irradiation position of the processing light with which the object is irradiated,
a condensed position of the processing light from the irradiation optical system is changed in an annular area surrounding an optical axis of the irradiation optical system.

60. The processing apparatus according to claim 59, wherein
a surface of the annular area faces toward the optical axis side.

61. The processing apparatus according to claim 59 or 60, wherein
the irradiation optical system emits the processing light, toward a surface intersecting with a plane perpendicular to an optical axis of an optical member that is located at the most object side along an optical path of the irradiation optical system among optical members having a power included in the irradiation optical system, from the optical member.

62. The processing apparatus according to any one of claims 59 to 61, wherein
the irradiation optical system emits the processing light by an angle equal to or larger than 90 degree with respect to the optical axis of the irradiation optical system.

63. The processing apparatus according to any one of claims 59 to 62, wherein
the processing light from the irradiation optical system is condensed on a surface that is concave with respect to an optical member of optical members included in the irradiation optical system that is located at the most object side.

64. The processing apparatus according to any one of claims 59 to 63, wherein
the irradiation optical system forms a condensed spot of the processing light on a surface surrounding the optical axis.

65. The processing apparatus according to any one of claims 59 to 64 further comprising a suction part that is configured to suck a gas around the irradiation optical system from a lateral space of the irradiation optical system.

66. The processing apparatus according to claim 65, wherein
the suction part forms a flow of the gas along the annular area.

67. The processing apparatus according to any one of claims 59 to 66 further comprising a supply part that is configured to supply a gas from a tip of the irradiation optical system.

68. A processing apparatus that is configured to process an object by a processing light from a processing light source, wherein
the processing apparatus comprises an irradiation optical system that is configured to condense the processing light to irradiate the object with it,
the irradiation optical system includes an optical member that is located at the most object side along an optical path of the processing light among optical members included in the irradiation optical system and that has a meniscus shape in which a convex plane faces toward an exit side of the processing light.

69. The processing apparatus according to claim 68, wherein
the processing light entering the optical member having the meniscus shape is deflected to be farther away from an optical axis of the optical member more as it propagates more.

70. The processing apparatus according to claim 68 or 69, wherein
the optical member having the meniscus shape emits the processing light by an angle equal to or larger than 90 degree with respect to an optical axis of the optical member.

71. The processing apparatus according to any one of claims 68 to 70, wherein
the irradiation optical system forms a condensed spot of the processing light on a surface surrounding an optical axis of the optical member.

72. The processing apparatus according to any one of claims 68 to 71, wherein
a position at which the object is irradiated with the processing light emitted from the optical member is located at a position that is away from an optical surface of the optical member at the object side toward an entrance side of the optical member along an optical axis direction of the irradiation optical system.

73. The processing apparatus according to any one of claims 68 to 72 further comprising a suction part that is configured to suck a gas around the irradiation optical system from a lateral space of the irradiation optical system.

74. The processing apparatus according to claim 73, wherein
the suction part is configured to suck the gas from a suction port that is formed at an entrance side of the optical member in an optical axis direction of the optical member having the meniscus shape.

75. The processing apparatus according to claim 73 or 74, wherein
the suction part forms a flow of the gas along a side surface of the optical member having the meniscus shape.

76. The processing apparatus according to any one of claims 68 to 75 further comprising a supply part that is configured to supply a gas from a tip of the irradiation optical system.

77. A processing apparatus that is configured to process an object by a processing light from a processing light source, wherein
the processing apparatus comprises an irradiation optical system that is configured to condense the processing light to irradiate the object with it,
the irradiation optical system includes an optical member that is located at the most object side along an optical path of the processing light among optical members included in the irradiation optical system,
a position on the object that is irradiated with the processing light emitted from the optical member is located at a position that is away from an object-side optical surface of the optical member located at the most object side toward an entrance side of the optical member along an optical axis direction of the irradiation optical system.

78. The processing apparatus according to claim 77, wherein
the irradiation optical system emits the processing light by an angle equal to or larger than 90 degree with respect to an optical axis of the irradiation optical system.

79. The processing apparatus according to claim 77 or 78 further comprising a suction part that is configured to suck a gas around the irradiation optical system from a lateral space of the irradiation optical system.

80. The processing apparatus according to claim 79, wherein
the suction part forms a flow of the gas along a side surface of the optical member.

81. The processing apparatus according to any one of claims 77 to 80 further comprising a supply part that is configured to supply a gas from a tip of the irradiation optical system.

82. A processing apparatus that is configured to process an object, which has a first surface and a second surface facing the first surface, by a processing light from a processing light source, wherein
the processing apparatus comprises:
an objective optical system that is disposed to be located between the first surface and the second surface and that is configured to irradiate at least one of the first surface and the second surface with the processing light; and
a movable optical member that is disposed on an processing optical path that is at the processing light source side from a position between the first surface and the second surface,
an irradiation position of the processing light on at least one of the first surface and the second surface is changed by moving the movable optical member.

83. The processing apparatus according to claim 82 further comprising a condensed optical system that is configured to condenses the processing light from the movable optical member on an intermediate condensed plane,
a condensed position of the processing light by the condensed optical system is changed on the intermediate condensed plane by moving the movable optical member.

84. The processing apparatus according to claim 83 further comprising an imaging optical system that is disposed between the condensed optical system and the objective optical system.

85. The processing apparatus according to claim 84, wherein
the imaging optical system has a reduction magnification.

86. The processing apparatus according to claim 84 or 85, wherein
an exit pupil of the imaging optical system is located at a position that is away from an imaging plane of the imaging optical system toward a side opposite to the objective optical system side.

87. The processing apparatus according to any one of claims 82 to 86 further comprising a measurement part that is configured to optically receive, through the objective optical system, a light from at least one of the first surface and the second surface as a measurement light to measure the at least one.

88. The processing apparatus according to claim 87 further comprising an imaging optical system that is disposed between the objective optical system and the movable optical member,
the measurement part is configured to optically receiving, through the objective optical system and the imaging optical system, the light from at least one of the first surface and the second surface as the measurement light.

89. The processing apparatus according to an one of claims 82 to 88, wherein
the objective optical system forms a conjugate plane that is optically conjugate with at least one of the first surface and the second surface.

90. The processing apparatus according to any one of claims 82 to 89, wherein
the objective optical system emits the processing light by an angle equal to or larger than 90 degree with respect to an optical axis of the objective optical system.

91. The processing apparatus according to any one of claims 82 to 90 further comprising a driving system that is configured to move the movable optical member,
the driving system moves the movable optical member in consideration of a projection characteristic of the objective optical system.

92. The processing apparatus according to any one of claims 82 to 91 further comprising a suction part that is configured to suck a gas around the objective optical system from a lateral space of the objective optical system.

93. The processing apparatus according to any one of claims 82 to 92 further comprising a supply part that is configured to supply a gas from a tip of the objective optical system.

94. A processing apparatus that is configured to process an object, which has a first surface and a second surface facing the first surface, by a processing light, wherein
the processing apparatus comprises:
an objective optical system that is disposed to be located between the first surface and the second surface and that is configured to irradiate at least one of the first surface and the second surface with the processing light;
a measurement part that is configured to optically receive, through the objective optical system, a light from at least one of the first surface and the second surface as a measurement light to measure at least one of the first surface and the second surface; and
a movement part that is configured to move the objective optical system along a first direction that intersects with a direction connecting the first surface and the second surface,
at least a part of at least one of the first surface and the second surface is measured when the movement part moves the objective optical system toward a first side along the first direction,
at least a part of at least one of the first surface and the second surface is processed when the movement part moves the objective optical system toward a second side opposite to the first side along the first direction.

95. A processing apparatus that is configured to process an object, which has a first surface and a second surface facing the first surface, by a processing light, wherein
the processing apparatus comprises:
an objective optical system that is disposed to be located between the first surface and the second surface and that is configured to irradiate at least one of the first surface and the second surface with the processing light; and
a suction part that is configured to suck a gas around the objective optical system from a lateral space of the objective optical system.

96. The processing apparatus according to claim 95 further comprising a supply part that is configured to supply a gas from a tip of the objective optical system.

97. The processing apparatus according to claim 95 or 96, wherein
the suction part forms a flow of the gas along at least one of the first surface and the second surface.

98. A processing apparatus that is configured to process an object, which has a first surface and a second surface facing the first surface, by a processing light, wherein
the processing apparatus comprises:
an objective optical system that is disposed to be located between the first surface and the second surface and that is configured to irradiate at least one of the first surface and the second surface with the processing light; and
a supply part that is configured to supply a gas from a tip of the objective optical system.

99. A processing apparatus that is configured to process an object by a processing light, wherein
the processing apparatus comprises:
an objective optical system that is disposed to be located between a first surface and a second surface of the object and that is configured to irradiate at least one of the first surface and the second surface with the processing light; and
a measurement part that is configured to optically receive, through the objective optical system, a light from at least one of the first surface and the second surface as a measurement light to measure at least one of the first surface and the second surface,
the measurement part includes a imaging element that is configured to capture an image of at least one of the first surface and the second surface two-dimensionally.
